# EUROPEAN PATENT SPECIFICATION

(11) **EP 3 299 920 B1**
(45) Date of publication and mention of the grant of the patent: **23.06.2021**
(21) Application number: 15892150.2
(22) Date of filing: 18.05.2015
(51) Int. Cl.: G05D 1/00

(54) **UNMANNED AERIAL VEHICLE CONTROL METHOD AND DEVICE BASED ON NO-HEAD MODE**
STEUERUNGSVERFAHREN FÜR UNBEMANNTES LUFTFAHRZEUG UND VORRICHTUNG AUF BASIS EINES NO-HEAD-MODUS
PROCÉDÉ DE COMMANDE DE VÉHICULE AÉRIEN SANS PILOTE ET DISPOSITIF BASÉ SUR UN MODE SANS TÊTE

(43) Date of publication of application: 28.03.2018
(73) Proprietor: SZ DJI Technology Co., Ltd., Shenzhen, Guangdong 518057 (CN)
(72) Inventor: SONG, Jianyu, Shenzhen City, Guangdong 518057 (CN)
(74) Representative: Goddar, Heinz J.
(86) International application number: PCT/CN2015/079191
(87) International publication number: WO 2016/183771

(56) References cited:
- EP-A1- 0 748 470
- EP-A1- 1 448 436
- EP-A1- 2 613 213
- WO-A1-95/24004
- WO-A1-2014/187205
- WO-A1-2015/126447
- CN-A- 104 180 796
- US-A1- 2012 221 179
- None

## Description

### FIELD OF THE INVENTION

The present invention relates to the technology field of unmanned aerial vehicle, and in particular, to a control method and apparatus of headless mode for an unmanned aerial vehicle.

### BACKGROUND

An aircraft without pilot is called unmanned aerial vehicle (UAV) for short. A UAV is an unmanned aircraft manipulated by using a radio remote control apparatus and a self-contained control program device. It has extensive application prospects in fields of detection, search and rescue, and aerial photography. A conventional control mode of unmanned aerial vehicle is a pilot-oriented mode. The so-called pilot-oriented mode means that a pilot's viewing angle always coincides with a head viewing angle of the unmanned aerial vehicle. The flight direction is in accordance with the direction of the pilot's orientation. That is, when a rudder stick of a remote control apparatus is moved forward, the unmanned aerial vehicle flies towards the direction of the head of the unmanned aerial vehicle. When the rudder stick of the remote control apparatus is moved backward, the unmanned aerial vehicle flies towards the direction of the tail of the unmanned aerial vehicle. One of the situations included in the pilot-oriented mode is as follows: the tail of the unmanned aerial vehicle faces the user. In this situation, the flying action of the unmanned aerial vehicle is consistent with the operating direction of the rudder stick of the remote control apparatus. Another situation is that the head of the unmanned aerial vehicle faces the manipulator. In this situation, if the rudder stick of the remote control apparatus is moved forward, the unmanned aerial vehicle flies towards the direction of the head of the unmanned aerial vehicle. That is, it flies towards the direction of the user. It is obvious that, in the above two situations, when the operating directions of the rudder stick are the same, the flight directions of the unmanned aerial vehicle are different. It causes that, in order to control the unmanned aerial vehicle to fly in accordance with the pilot-oriented mode, the user needs to accurately judge the orientation of the head of the unmanned aerial vehicle at any time. However, it is quite difficult for a user who is new to the unmanned aerial vehicle to control in the pilot-oriented mode.

In order to solve the operation difficulty caused by the pilot-oriented mode, a headless mode of remote control for an unmanned aerial vehicle is proposed. In the headless mode of the unmanned aerial vehicle, when the unmanned aerial vehicle takes off, a take-off direction of the unmanned aerial vehicle is recorded. The take-off direction is used as a flight direction of the unmanned aerial vehicle. For example, when the take-off direction is directly in front of the remote control apparatus, a corresponding relationship between the flight direction of the unmanned aerial vehicle and the control direction on the remote control apparatus is as follows: when the rudder stick of the remote control apparatus is pushed forward, the unmanned aerial vehicle flies along the direction of the take-off direction. When the rudder stick is pushed backwards, the unmanned aerial vehicle flies along the opposite direction of the take-off direction. When the rudder stick is pushed right, the unmanned aerial vehicle flies right. And, when the rudder stick is pushed left, the unmanned aerial vehicle flies left.

When the unmanned aerial vehicle rotates 180 degrees clockwise, the corresponding relationship between the flight direction of the unmanned aerial vehicle and the control direction on the remote control apparatus is as follows: when the rudder stick of the remote control apparatus is pushed forward, the unmanned aerial vehicle flies along an opposite direction of the take-off direction. When the rudder stick is pushed backwards, the unmanned aerial vehicle flies along the direction of the take-off direction. When the rudder stick is pushed right, the unmanned aerial vehicle flies right. And, when the rudder stick is pushed left, the unmanned aerial vehicle flies left. Similarly, the problem of disordered flight directions and increased control difficulty may also occur in the headless mode of unmanned aerial vehicle.

US 2012/221179 A1 describes a method for adjusting a flight direction of an unmanned aerial vehicle using a control device; the method receives a first direction of the control device and a control command of the unmanned aerial vehicle, obtains a second direction of the unmanned aerial vehicle, and calculates an angle deviation between the first direction and the second direction. The method further adjusts the control command of the unmanned aerial vehicle according to the angle deviation to obtain an adjusted control command, and controls a flight direction of the unmanned aerial vehicle according to the adjusted control command.

EP 0 748 470 A1 describes that a frame of reference is selected, and control inputs provided by a vehicle operator are transformed to account for the orientation of a remotely operated vehicle with respect to the selected frame of reference such that the remotely operated vehicle responds to the control inputs with respect to the selected frame of reference. An earth frame of reference may be selected based on a fixed true heading, e.g., North, or based on the initial orientation of the vehicle operator. Alternatively, a vehicle frame of reference may be selected which provides a fixed frame of reference with respect to the vehicle and a variable frame of reference with respect to the vehicle operator. A vehicle operator frame of reference may also be selected based on the orientation of the vehicle operator with respect to earth, and control commands are transformed based on changes in both the operator orientation with respect to the earth reference and the remotely operated vehicle orientation with respect to the earth reference, which provides a fixed frame of reference with respect to the vehicle operator and a variable frame of reference with respect to the vehicle. The remotely operated vehicle heading transformation may be based on a selected forward, fixed or variable point on the vehicle related to a vehicle center of gravity, a forward part of the vehicle, the location of a sensor on the vehicle, or some other arbitrary reference location on the vehicle.

WO 2014/187205 A1 describes a remote control signal transmitting and receiving apparatus and method, and remote control equipment, the remote control signal receiving apparatus being arranged at the side of a remote control model. The receiving apparatus comprises: a sensor, used for determining the current azimuth angle of the remote control model; a receiver, used for receiving a remote control signal; and a processor, used for determining operation information and azimuth angle information contained in the remote control signal, the azimuth angle information being used for indicating the current azimuth angle of a remote control signal transmitter. Moreover, the processor is used for correcting the direction indicated by the operation information and determining the direction of actual motion of the remote control model according to the current azimuth angle of the remote control model and the current azimuth angle of the transmitter, and the direction of actual motion is same as the direction of motion indicated by the operation information.

### SUMMARY OF THE INVENTION

The present invention relates to a control method according to claim 1, a flight controller according to claim 6, an unmanned aerial vehicle according to claim 11, and a remote controller according to claim 12. Claims 2 to 5 refer to specifically advantageous realizations of the control method of claim 1; claims 7 to 10 refer to specifically advantageous realizations of the flight controller according to claim 6; and claim 13 refers to a specifically advantageous realization of the remote controller according to claim 12.

With respect to the above existing technical defects, embodiments of the present invention provide a control method and apparatus of headless mode for an unmanned aerial vehicle to achieve smart control of headless mode for an unmanned aerial vehicle. It may reduce operation difficulty of remote control and improve user experience.

In the first aspect of the present invention, a control method of headless mode for an unmanned aerial vehicle may include
receiving remote control information sent by a remote controller. The remote control information may include nose orientation of the remote controller, contained in attitude information of the remote controller, and an operating angle of a rudder stick of the remote controller. The remote control information may be used for indicating an operating direction of the rudder stick of the remote controller.

The control method may also include acquiring attitude information of an unmanned aerial vehicle.

The control method may also include determining a target flight direction of the unmanned aerial vehicle in accordance with the remote control information and the attitude information of the unmanned aerial vehicle. The target flight direction is equal to the operating direction of the rudder stick of the remote controller.

The control method may further include controlling the unmanned aerial vehicle to fly towards the target flight direction.

In the second aspect of the present invention, a control method of headless mode for an unmanned aerial vehicle may include sending attitude information of an unmanned aerial vehicle to a remote controller.

The control method may also include receiving remote control information sent by the remote controller. The remote control information may include a target flight direction of the unmanned aerial vehicle. The remote control information may be acquired by the remote controller in accordance with the attitude information of the unmanned aerial vehicle, the nose orientation of the remote controller, contained in the attitude information of the remote controller, and an operating angle of a rudder stick of the remote controller.

The control method may further include controlling the unmanned aerial vehicle to fly towards the target flight direction.

In the third aspect of the present invention, a control method of headless mode for an unmanned aerial vehicle may include monitoring a user's operation on a rudder stick of a remote controller to obtain an operating angle of the rudder stick.

The control method may also include acquiring the nose orientation of the remote controller, contained in the attitude information of the remote controller. The control method may also include generating remote control information in accordance with the operating angle of the rudder stick and the attitude information of the remote controller. The remote control information may be used for indicating an operating direction of the rudder stick of the remote controller.

The control method may further include sending the remote control information to an unmanned aerial vehicle.

In the fourth aspect of the present invention, a control method of headless mode for unmanned aerial vehicle may include monitoring a user's operation on a rudder stick of a remote controller to obtain an operating angle of the rudder stick.

The control method may also include acquiring the attitude information of the remote controller and receiving attitude information of an unmanned aerial vehicle sent by the unmanned aerial vehicle.

The control method may also include obtaining a target flight direction of the unmanned aerial vehicle in accordance with the operating angle of the rudder stick, nose orientation of the remote controller, contained in the attitude information of the remote controller, and the attitude information of the unmanned aerial vehicle.

The control method may further include sending remote control information to the unmanned aerial vehicle. The remote control information may include the target flight direction of the unmanned aerial vehicle.

In the fifth aspect of the present invention, a flight controller may include a receiver configured to receive remote control information sent by a remote controller. The remote control information may include the nose orientation of the remote controller, contained in the attitude information of the remote controller, and an operating angle of a rudder stick of the remote controller. The remote control information may be used for indicating an operating direction of the rudder stick of the remote controller.

The flight controller may also include an attitude sensor configured to acquire attitude information of an unmanned aerial vehicle.

The flight controller may also include a smart controller configured to determine a target flight direction of the unmanned aerial vehicle in accordance with the remote control information and the attitude information of the unmanned aerial vehicle, and control the unmanned aerial vehicle to fly towards the target flight direction. The target flight direction is equal to the operating direction of the rudder stick.

In the sixth aspect of the present invention, a flight controller may include a transmitter configured to send attitude information of an unmanned aerial vehicle to a remote controller.

The flight controller may also include a receiver configured to receive remote control information sent by the remote controller. The remote control information may include a target flight direction of the unmanned aerial vehicle. The remote control information may be acquired by the remote controller in accordance with the attitude information of the unmanned aerial vehicle, nose orientation of the remote controller, contained in the attitude information of the remote controller, and an operating angle of a rudder stick of the remote controller.

The flight controller may also include a smart controller configured to control the unmanned aerial vehicle to fly towards the target flight direction.

In the seventh aspect of the present invention, a processor may include a smart controller configured to monitor a user's operation on a rudder stick of a remote controller to obtain an operating angle of the rudder stick.

The processor may also include an attitude sensor configured to acquire attitude information of the remote controller.

The smart controller may be further configured to generate remote control information in accordance with the operating angle of the rudder stick and the nose orientation of the remote controller, contained in the attitude information of the remote controller. The remote control information may be used for indicating an operating direction of the rudder stick of the remote controller.

The processor may also include a transmitter configured to send the remote control information to an unmanned aerial vehicle.

In the eighth aspect of the present invention, a processor may include a smart controller configured to monitor a user's operation on a rudder stick of a remote controller to obtain an operating angle of the rudder stick.

The processor may also include an attitude sensor configured to acquire attitude information of the remote controller.

The processor may also include a receiver configured to receive attitude information of an unmanned aerial vehicle sent by the unmanned aerial vehicle.

The smart controller may be further configured to obtain a target flight direction of the unmanned aerial vehicle in accordance with the operating angle of the rudder stick, nose orientation of the remote controller, contained in the attitude information of the remote controller, and the attitude information of the unmanned aerial vehicle.

The processor may further include a transmitter configured to send remote control information to the unmanned aerial vehicle. The remote control information may include the target flight direction of the unmanned aerial vehicle.

In the ninth aspect of the present invention, an unmanned aerial vehicle may include the flight controller in accordance with the fifth aspect.

In the tenth aspect of the present invention, an unmanned aerial vehicle may include the flight controller in accordance with the sixth aspect.

In the eleventh aspect of the present invention, a remote controller may include the processor in accordance with the seventh aspect.

In the twelfth aspect of the present invention, a processor may include the processor in accordance with the eighth aspect.

In the thirteenth aspect of the present invention, a control system of unmanned aerial vehicle may include the flight controller in accordance with the fifth aspect and the processor in accordance with the seventh aspect. In some embodiments, the control system of unmanned aerial vehicle may include the flight controller in accordance with the sixth aspect and the processor in accordance with the eighth aspect.

It can be seen that, in one aspect of the present invention, a flight controller at the unmanned aerial vehicle receives remote control information from a remote controller. The remote control information may be used for indicating an operating direction of a rudder stick of the remote controller. Then, a target flight direction of the unmanned aerial vehicle may be determined in accordance with the remote control information and attitude information of the unmanned aerial vehicle. The target flight direction may be equal to the operating direction of the rudder stick of the remote controller. Finally, the unmanned aerial vehicle may be controlled to fly towards the target flight direction. It may achieve smart remote control of headless mode by making the flight direction of the unmanned aerial vehicle equal to the operating direction of the rudder stick. Accordingly, it may also simplify remote control operations, reduce operation difficulty of remote control, and improve user experience.

In another aspect of the present invention, a flight controller at the unmanned aerial vehicle receives remote control information from a remote controller. The remote control information may include a target flight direction of the unmanned aerial vehicle. Then, the unmanned aerial vehicle may be controlled to fly towards the target flight direction. The target flight direction of the unmanned aerial vehicle may be obtained by a processor at the remote controller in accordance with attitude information of the unmanned aerial vehicle, nose orientation of the remote controller, contained in the attitude information of the remote controller, and an operating direction of a rudder stick. As the target flight direction may be equal to the operating direction of the rudder stick of the remote controller, the smart remote control in a headless mode is achieved. It may make the flight direction of the unmanned aerial vehicle to be equal to the operating direction of the rudder stick. Accordingly, it may simplify remote control operations, reduce operation difficulty of remote control, and improve user experience.

### DESCRIPTION OF THE DRAWINGS

In order to illustrate the technical solutions in accordance with the embodiments of the present invention more clearly, the accompanying drawings to be used for describing the embodiments are introduced briefly in the following. It is apparent that the accompanying drawings in the following description are only some embodiments of the present invention. Persons of ordinary skill in the art can obtain other accompanying drawings in accordance with the accompanying drawings without any creative efforts.
Fig. 1 is a schematic flow chart of a control method of headless mode for an unmanned aerial vehicle in accordance with an embodiment of the present invention.
Fig. 2 is a schematic flow chart of a control method of headless mode for an unmanned aerial vehicle in accordance with another embodiment of the present invention.
Fig. 3a is a schematic view of an operating direction of a rudder stick identified in a coordinate system of a remote controller in accordance with an embodiment of the present invention.
Fig. 3b is a schematic view of a coordinate system of an unmanned aerial vehicle in accordance with an embodiment of the present invention.
Fig. 3c is a schematic view of a target flight direction of an unmanned aerial vehicle identified in a coordinate system of the unmanned aerial vehicle in accordance with an embodiment of the present invention.
Fig. 3d is a schematic flow chart of a control method of headless mode for an unmanned aerial vehicle in accordance with another embodiment of the present invention.
Fig. 3e is a schematic flow chart of a control method of headless mode for an unmanned aerial vehicle in accordance with another embodiment of the present invention.
Fig. 3f is a schematic flow chart of a control method of headless mode for an unmanned aerial vehicle in accordance with another embodiment of the present invention.
Fig. 4a is a schematic flow chart of a control method of headless mode for an unmanned aerial vehicle in accordance with another embodiment of the present invention.
Fig. 4b is a schematic flow chart of a control method of headless mode for an unmanned aerial vehicle in accordance with another embodiment of the present invention.
Fig. 5a is a schematic flow chart of a control method of headless mode for an unmanned aerial vehicle in accordance with another embodiment of the present invention.
Fig. 5b is a schematic flow chart of a control method of headless mode for an unmanned aerial vehicle in accordance with another embodiment of the present invention.
Fig. 6 is a schematic flow chart of a control method of headless mode for an unmanned aerial vehicle in accordance with another embodiment of the present invention.
Fig. 7 is a schematic structural view of a flight controller in accordance with an embodiment of the present invention.
Fig. 8 is a schematic structural view of a flight controller in accordance with another embodiment of the present invention.
Fig. 9 is a schematic structural view of a processor in accordance with an embodiment of the present invention.
Fig. 10 is a schematic structural view of a processor in accordance with another embodiment of the present invention.
Fig. 11 is a schematic structural view of an unmanned aerial vehicle in accordance with an embodiment of the present invention.
Fig. 12 is a schematic structural view of an unmanned aerial vehicle in accordance with another embodiment of the present invention.
Fig. 13 is a schematic structural view of a remote controller in accordance with an embodiment of the present invention.
Fig. 14 is a schematic structural view of a remote controller in accordance with another embodiment of the present invention.
Fig. 15a is a schematic structural view of a control system of unmanned aerial vehicle in accordance with an embodiment of the present invention.
Fig. 15b is a schematic structural view of a control system of unmanned aerial vehicle in accordance with another embodiment of the present invention.

### DETAILED DESCRIPTION OF THE INVENTION

In some embodiments of the present invention, a control method of headless mode for an unmanned aerial vehicle is provided to achieve smart control in a headless mode of unmanned aerial vehicle. It may reduce operational difficulty of remote control and improve user experience. In some embodiments of the present invention, a flight controller, a processor, an unmanned aerial vehicle, and a remote controller are also provided accordingly to achieve smart control in a headless mode of unmanned aerial vehicle.

In order to make the objectives, features, and advantages of the present invention clear and comprehensible, the technical solutions in the embodiments of the present invention are described below with reference to the accompanying drawings in the embodiments of the present invention. Apparently, the embodiments described below are merely some of rather than all of the embodiments of the present invention. Based on the embodiments in the present invention, all other embodiments obtained by persons of ordinary skill in the art without creative efforts all belong to the protection scope of the present invention.

The unmanned aerial vehicle in accordance with the embodiments of the present invention is provided with a flight controller which includes the following modules:
A positioner configured to acquire geographic position information of the unmanned aerial vehicle. In some embodiments, the positioner may be, but not limited to, a Global Position System (GPS).
A receiver configured to receive remote control information sent by a remote controller.
A smart controller configured to process the remote control information and control an unmanned aerial vehicle to fly in accordance with the processing result.

An attitude sensor configured to obtain attitude information of the unmanned aerial vehicle statically or dynamically. The attitude information of the unmanned aerial vehicle may include a yaw angle (i.e., nose orientation), a pitch angle, and a roll angle of the unmanned aerial vehicle.

For example, in some embodiments of the present invention, the flight controller may be equipped with a compass, an Inertial Measurement Unit (IMU), and other attitude sensors simultaneously. The compass is mainly used for obtaining flight direction information of the unmanned aerial vehicle while the IMU is mainly used for obtaining both flight direction information and attitude information of the unmanned aerial vehicle. Therefore, in some embodiments of the present invention, the flight direction of the unmanned aerial vehicle may be obtained accurately by a combination of data information obtained by the compass and the IMU. It is also definitely feasible to obtain the flight direction of the unmanned aerial vehicle accurately by a combination of geographic position information of the unmanned aerial vehicle acquired by the GPS and flight direction information and attitude information of the unmanned aerial vehicle acquired by the IMU.

A recorder configured to record geographic position information of a return point, a real-time flight direction of the unmanned aerial vehicle, and so on.

The remote controller is also equipped with a processor which mainly includes the following modules:
A smart controller configured to monitor a user's operation and obtain related remote control information.
A transmitter configured to send the remote control information to the unmanned aerial vehicle.
A locator configured to acquire geographic position information of the remote controller.

An attitude sensor configured to obtain attitude information of the remote controller statically or dynamically. The attitude information of the remote controller may include nose orientation, a pitch angle, and a roll angle of the remote controller.

For example, in some embodiments of the present invention, the processor may be equipped with a compass, an IMU, and other attitude sensors simultaneously. The compass may be mainly used for obtaining direction information of the remote controller while the IMU is mainly used for obtaining attitude information of the remote controller. Therefore, in some embodiments of the present invention, the nose orientation of the remote controller may be obtained accurately by a combination of data information obtained by the compass and the IMU. It is also feasible to obtain the nose orientation of the remote controller accurately by a combination of geographic position information of the remote controller acquired by the GPS and attitude information of the remote controller acquired by the IMU.

It should be noted that the present invention may achieve corresponding functions based on a lock mechanism of remote control apparatus for a headless mode of an unmanned aerial vehicle. Therefore, the remote controller may be equipped with a lock mode button of remote control apparatus through which the functions corresponding to the lock mechanism of remote control apparatus may be enabled. The lock mechanism of remote control apparatus may be as follows: in the headless mode of the unmanned aerial vehicle, it is neither necessary to decide nose orientation of the unmanned aerial vehicle nor necessary to record a flight direction of the unmanned aerial vehicle during take-off. It is only necessary to control the unmanned aerial vehicle to fly towards an operating direction of a rudder stick by operating the rudder stick of the remote controller. In the lock mechanism of remote control apparatus, it may be ensured that the flight direction of the unmanned aerial vehicle may be equal to the operating direction of the rudder stick. Accordingly, it may achieve smart control over the unmanned aerial vehicle and reduce operational difficulty of remote control for the unmanned aerial vehicle.

In the headless mode of the remote control, in addition to the mentioned lock mode of remote control apparatus, a head-locked mode (heading lock mechanism) and a return-point lock mode (return point lock mechanism) may also be set through corresponding buttons respectively to achieve multi-selection of smart control over the unmanned aerial vehicle.

In some embodiments, a headless mode button and a conventional head mode button for controlling the unmanned aerial vehicle may both be equipped on the remote controller. The head mode of unmanned aerial vehicle is the so-called pilot-oriented mode. Accordingly, a user can select the headless mode or the pilot-oriented mode. In addition, in the headless mode, the user can further select any one of the above head-locked mode, the return-point locked mode, and the lock mode of remote control apparatus.

It should also be noted that, corresponding programs of the headless mode and/or the pilot-oriented mode, and corresponding programs of the head-locked mode, the return-point locked mode and the lock mode of remote control apparatus may also be equipped in the unmanned aerial vehicle in order to make the unmanned aerial vehicle to cooperate with the remote controller to accomplish these corresponding remote control functions.

Based on the above introduction, the present invention is introduced in detail below with specific embodiments.

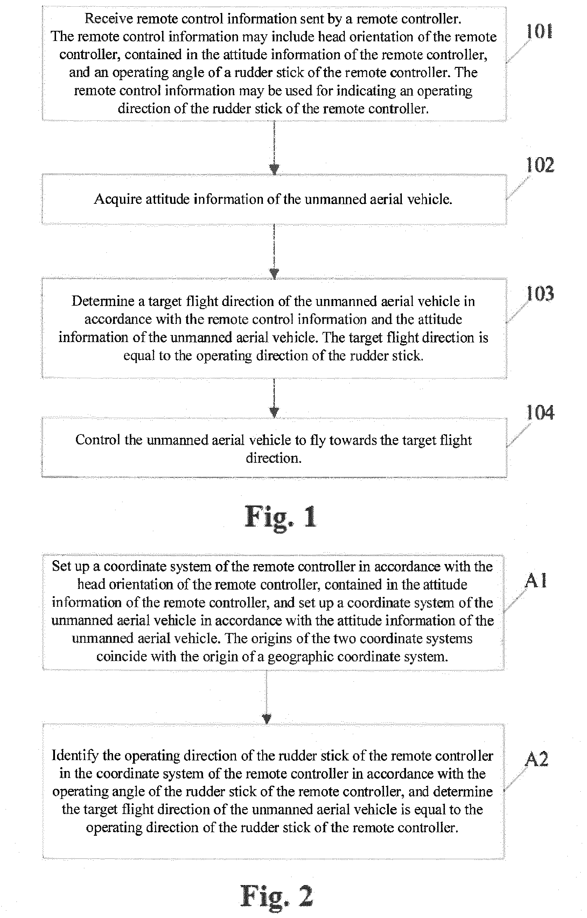

Fig. 1 is a schematic flow chart of a control method of headless mode for an unmanned aerial vehicle in accordance with an embodiment of the present invention. As shown in Fig. 1, a control method of headless mode for an unmanned aerial vehicle, applicable to a flight controller at the unmanned aerial vehicle, may include:
Step 101: Receiving remote control information sent by a remote controller. The remote control information may include nose orientation of the remote controller, contained in the attitude information of the remote controller, and an operating angle of a rudder stick of the remote controller. The remote control information may be used for indicating an operating direction of the rudder stick of the remote controller.

In some embodiments, when the user selects a headless mode and starts the lock mechanism of remote control apparatus, the remote control information may be generated by a processor at the remote controller in accordance with an angle at which a user operates a rudder stick and attitude information of the remote controller.

Step 102: Acquiring attitude information of the unmanned aerial vehicle.

Step 103: Determining a target flight direction of the unmanned aerial vehicle in accordance with the remote control information and the attitude information of the unmanned aerial vehicle. The target flight direction is equal to the operating direction of the rudder stick.

Step 104: Controlling the unmanned aerial vehicle to fly towards the target flight direction.

In the embodiment of the present invention, the processor of the remote controller may provide related remote control information, including the nose orientation of the remote controller, contained in the attitude information of the remote controller, and an operating angle of the rudder stick of the remote controller. Then, the flight controller at the unmanned aerial vehicle may perform analysis and processing by a combination of the remote control information and the attitude information of the unmanned aerial vehicle to obtain the target flight direction.

It can be seen that the flight controller may receive remote control information from a remote controller. The remote control information may be used for indicating an operating direction of the rudder stick of the remote controller. Then, the target flight direction of the unmanned aerial vehicle may be determined in accordance with the remote control information and the attitude information of the unmanned aerial vehicle. The target flight direction may be equal to the operating direction of the rudder stick of the remote controller. Finally, the unmanned aerial vehicle may be controlled to fly towards the target flight direction. Accordingly, the control method achieves smart remote control of headless mode because the flight direction of the unmanned aerial vehicle is equal to the operating direction of the rudder stick. It may simplify remote control operations, reduce operational difficulty of remote control over the unmanned aerial vehicle, and improve user experience.

In some embodiments, step 103 may include steps as shown in Fig. 2:
Step A1: Setting up a coordinate system of the remote controller in accordance with the nose orientation of the remote controller, contained in the attitude information of the remote controller, and setting up a coordinate system of the unmanned aerial vehicle in accordance with the attitude information of the unmanned aerial vehicle. The origins of the two coordinate systems coincide with the origin of a geographic coordinate system.
Step A2: Identifying the operating direction of the rudder stick of the remote controller in the coordinate system of the remote controller in accordance with the operating angle of the rudder stick of the remote controller, and determining the target flight direction of the unmanned aerial vehicle is equal to the operating direction of the rudder stick of the remote controller.

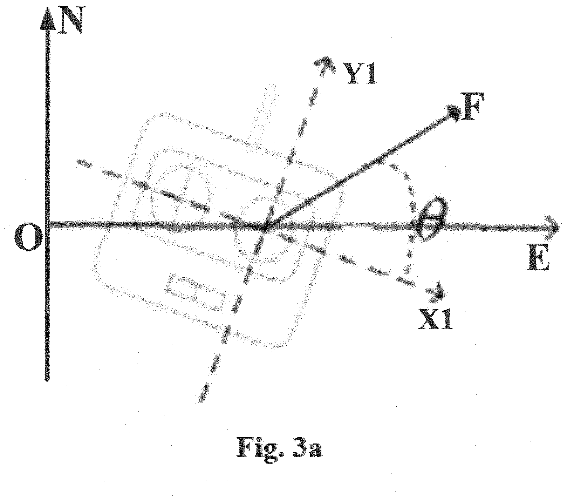

Fig. 3a is a schematic view of an operating direction of a rudder stick identified in a coordinate system of a remote controller. The geographic coordinate system NEO is established on a plane. Then, the coordinate system of the remote controller Y1X1O is set up in accordance with nose orientation of the remote controller, contained in the attitude information of the remote controller. The origin of the coordinate system of the remote controller Y1X1O coincides with the origin O of the geographic coordinate system NEO. The nose orientation of the remote controller may correspond to the upper half axis of the vertical axis (i.e., positive Yl-axis) while the tail of the remote controller may correspond to the lower half axis of the vertical axis (i.e., negative Yl-axis). The operating angle of the rudder stick of the remote controller, the angle *θ* in Fig. 3a, may be obtained counterclockwise from the positive half axis of the horizontal axis of the coordinate system of the remote controller Y1X1O. The direction F, forming the angle *θ* with the positive half axis of the horizontal axis of the coordinate system of the remote controller Y1X1O, is the operating direction of the rudder stick of the remote controller.

The *θ* may be obtained from a channel value corresponding to the operation of the rudder stick of the remote controller. It may be the value of trigonometric function on the channel value.

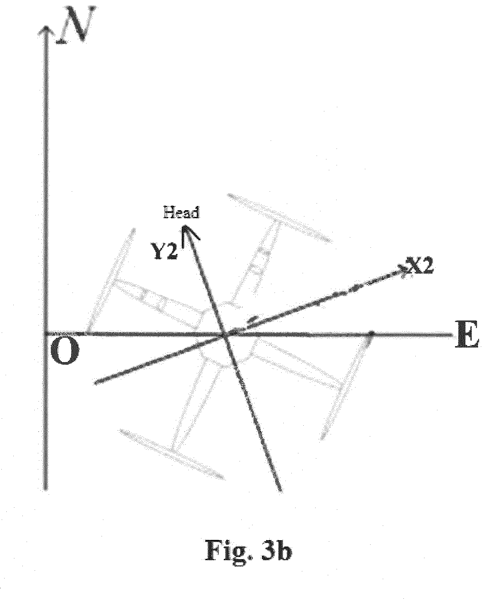

Fig. 3b is a schematic view of a coordinate system of an unmanned aerial vehicle. In Fig. 3b, a geographic coordinate system NEO is established on a plane. Then, the coordinate system of the unmanned aerial vehicle Y2X2O is set up in accordance with attitude information of the unmanned aerial vehicle. The origin of the the coordinate system of the unmanned aerial vehicle Y2X2O coincides with the origin O of the geographic coordinate system. The nose orientation of the unmanned aerial vehicle may correspond to the upper half axis of the vertical axis of the coordinate system of the unmanned aerial vehicle Y2X2O.

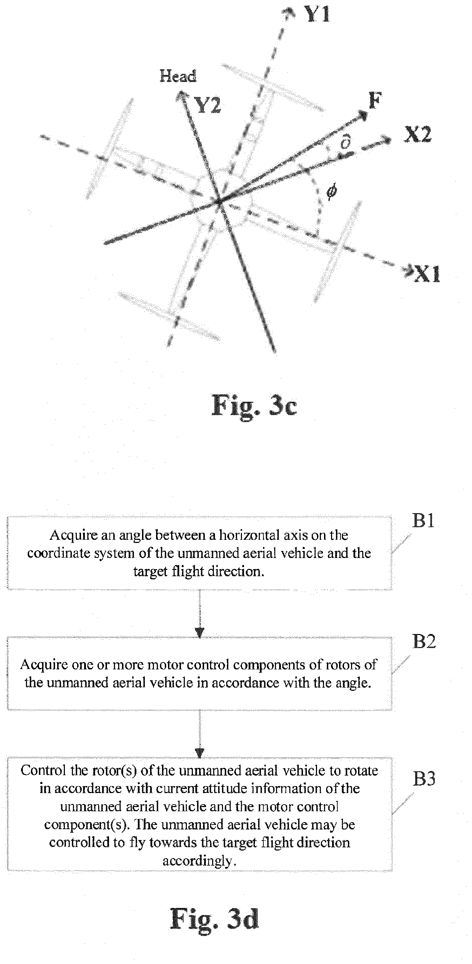

Fig. 3c is a schematic view of a target flight direction of an unmanned aerial vehicle identified in a coordinate system of the unmanned aerial vehicle in accordance with an embodiment of the present invention. On the basis of Figs. 3a and 3b, Fig. 3c sets up the coordinate system of the remote controller and the coordinate system of the unmanned aerial vehicle in accordance with the nose orientation of the remote controller, contained in the attitude information of the remote controller, and the attitude information of the unmanned aerial vehicle, respectively. The origins of the coordinate system of the remote controller and the coordinate system of the unmanned aerial vehicle coordinate with the origin of the geographic coordinate system NEO. That is, Fig. 3c is obtained by coinciding Fig. 3a with Fig. 3b. In Fig. 3c, the angle *φ* is equal to *θ* . The direction F is the target flight direction of the unmanned aerial vehicle. And, an angle ∂ between the direction F and the horizontal axis of the coordinate system of the unmanned aerial vehicle may be the target flight angle of the unmanned aerial vehicle.

It should be noted that, when the coordinate systems as shown in Fig. 3c is established, the coordinate systems are established on the same horizontal plane. However, in an actual application, the remote controller may also be in a different attitude, and thus it is necessary to further take into account a pitch angle and a roll angle in the attitude information of the remote controller. It will need to identify the direction F more accurately and calculate the angle ∂ between the direction F and the horizontal axis of the coordinate system of the unmanned aerial vehicle. In Figs. 3a-3c, descriptions are given as an example by assuming that the unmanned aerial vehicle is currently flying horizontally and that the remote controller is also in a horizontal plane.

Furthermore, step 104 may also include steps as shown in Fig. 3d:
Step B1: Acquiring an angle between a horizontal axis on the coordinate system of the unmanned aerial vehicle and the target flight direction.
Step B2: Acquiring one or more motor control components of rotors of the unmanned aerial vehicle in accordance with the angle.
Step B3: Controlling the rotor(s) of the unmanned aerial vehicle to rotate in accordance with current attitude information of the unmanned aerial vehicle and the motor control component(s). The unmanned aerial vehicle may be controlled to fly towards the target flight direction accordingly.

A motor control component of each rotor is obtained in accordance with the angle ∂ between the direction F and the horizontal axis of the coordinate system of the unmanned aerial vehicle as shown in Fig. 3c and in combination with the attitude of the unmanned aerial vehicle. The rotors are controlled to rotate in accordance with the motor control components of the rotors to achieve the purpose of controlling the unmanned aerial vehicle to fly towards the direction F.

It can be seen that, in the embodiment of the present invention, the unmanned aerial vehicle may obtain a target flight direction in accordance with the attitude information of the remote controller, the operating angle of the rudder stick of the remote controller, and the current attitude information of the unmanned aerial vehicle. The target flight direction may be equal to the operating direction of the rudder stick of the remote controller. Accordingly, the unmanned aerial vehicle may be controlled to fly towards the target flight direction.

It should be noted that, as the embodiment of the present invention achieves the functions corresponding to the lock mechanism of remote control apparatus, the remote controller may need to carry indication information of headless mode and indication information of remote controller locked mechanism in the remote control information. The unmanned aerial vehicle may start the remote controller locked mode in the headless mode accordingly.

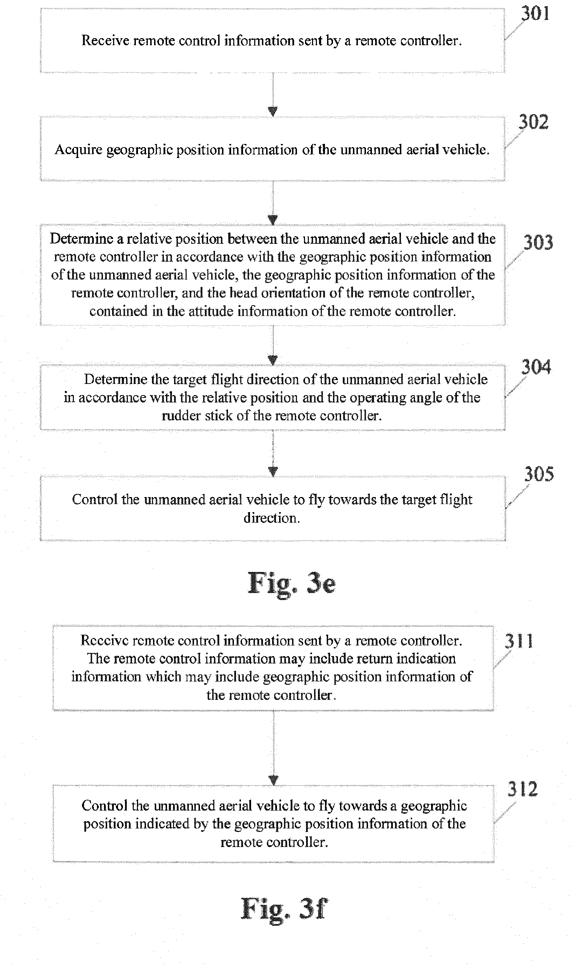

As shown in Fig. 3e, in some embodiments of the present invention, a control method of headless mode for an unmanned aerial vehicle may be applied to a flight controller at an unmanned aerial vehicle, which may include:
Step 301: Receiving remote control information sent by a remote controller.

The remote control information may include nose orientation of the remote controller, contained in attitude information of the remote controller, an operating angle of a rudder stick of the remote controller, and geographic position information of the remote controller.

Step 302: Acquiring geographic position information of the unmanned aerial vehicle.

The geographic position information of the unmanned aerial vehicle may be acquired through a positioner in the flight controller.

Step 303: Determining a relative position between the unmanned aerial vehicle and the remote controller in accordance with the geographic position information of the unmanned aerial vehicle, the geographic position information of the remote controller, and the nose orientation of the remote controller, contained in the attitude information of the remote controller.

It is feasible to determine the physical location of the remote controller and the nose orientation thereof in accordance with the geographic position information of the remote controller and the nose orientation of the remote controller, contained in the attitude information of the remote controller. Then, a relative position of the unmanned aerial vehicle and the remote controller is determined in accordance with the geographic position information of the unmanned aerial vehicle. The relative position may refer to that the unmanned aerial vehicle is in front of the head of the remote controller or in the back of the head of the remote controller.

Step 304: Determining the target flight direction of the unmanned aerial vehicle in accordance with the relative position and the operating angle of the rudder stick of the remote controller.

It should be noted that, in the embodiment of the present invention, the operating angle of the rudder stick of the remote controller is 90 degrees or 270 degrees. Only the two channels on the remote controller are used. That is, the operating direction of the rudder stick is the direction of the nose orientation of the remote controller or the opposite direction of the nose orientation of the remote controller.

In accordance with that the unmanned aerial vehicle is in front of or in the back of the head of the remote controller determined in step 303, the target flight direction of the unmanned aerial vehicle may include the following situations:
1. If the unmanned aerial vehicle is in front of the head of the remote controller and the operating direction of the rudder stick is the direction of the nose orientation of the remote controller, the target flight direction of the unmanned aerial vehicle may be determined as away from the remote controller. The unmanned aerial vehicle may fly in accordance with a direction indicated by the operating direction of the rudder stick. Accordingly, it may fly away from the remote controller.
2. If the unmanned aerial vehicle is in front of the head of the remote controller and the operating direction of the rudder stick is the opposite direction of the nose orientation of the remote controller, the target flight direction of the unmanned aerial vehicle may be determined to fly towards the remote controller. The unmanned aerial vehicle may fly in accordance with a direction indicated by the operating direction of the rudder stick. Accordingly, it may fly close to the remote controller.
3. If the unmanned aerial vehicle is in the back of the head of the remote controller and the operating direction of the rudder stick is the direction of the nose orientation of the remote controller, the target flight direction of the unmanned aerial vehicle may be determined to fly towards the remote controller. The unmanned aerial vehicle may fly in accordance with a direction indicated by the operating direction of the rudder stick. Accordingly, it may fly close to the remote controller.
4. If the unmanned aerial vehicle is in the back of the head of the remote controller and the operating direction of the rudder stick is the opposite direction of the nose orientation of the remote controller, the target flight direction of the unmanned aerial vehicle may be determined as away from the remote controller. The unmanned aerial vehicle may fly in accordance with a direction indicated by the operating direction of the rudder stick. Accordingly, it may fly away from the remote controller.

Step 305: Controlling the unmanned aerial vehicle to fly towards the target flight direction.

It can be seen that, in the embodiment of the present invention, the remote control information sent by the remote controller may further include geographic position information of the remote controller. Therefore, in the embodiment of the present invention, the target flight direction of the unmanned aerial vehicle may be determined by a combination of the geographic position information of the remote controller and the nose orientation of the remote controller, contained in the attitude information of the remote controller, to effectively control the geographic position of the unmanned aerial vehicle and avoid that the unmanned aerial vehicle gets lost.

It should be noted that the embodiments of the present invention and the embodiments provided in Fig. 1 to Fig. 3d may be implementation of two functions. The two functions may be selected by different selection switches on the remote controller or by starting different application programs. A user may select any one of the two as required.

In addition, in the embodiment of the present invention, it may be also feasible to dynamically set a return point and control the unmanned aerial vehicle to return. Therefore, in the embodiment of the present invention, a control method of headless mode for an unmanned aerial vehicle may be further applied to a flight controller of an unmanned aerial vehicle, which, as shown in Fig. 3f, may include:
Step 311: Receiving remote control information sent by a remote controller. The remote control information may include return indication information which may include geographic position information of the remote controller.

It can be understood that, when the unmanned aerial vehicle is required to return, it is feasible to trigger a return-point locked mode by starting a related button on the remote controller. When the remote controller is turned off, it may send remote control information to the unmanned aerial vehicle and return instruction information may be contained in the remote control information. The return instruction information may include at least geographic position information of the remote controller.

Step 312: Controlling the unmanned aerial vehicle to fly towards a geographic position indicated by the geographic position information of the remote controller.

In the embodiment of the present invention, the geographic position of the remote controller may be used as a return point to achieve dynamic setting of the return point. It may be used to achieve the final return of the unmanned aerial vehicle.

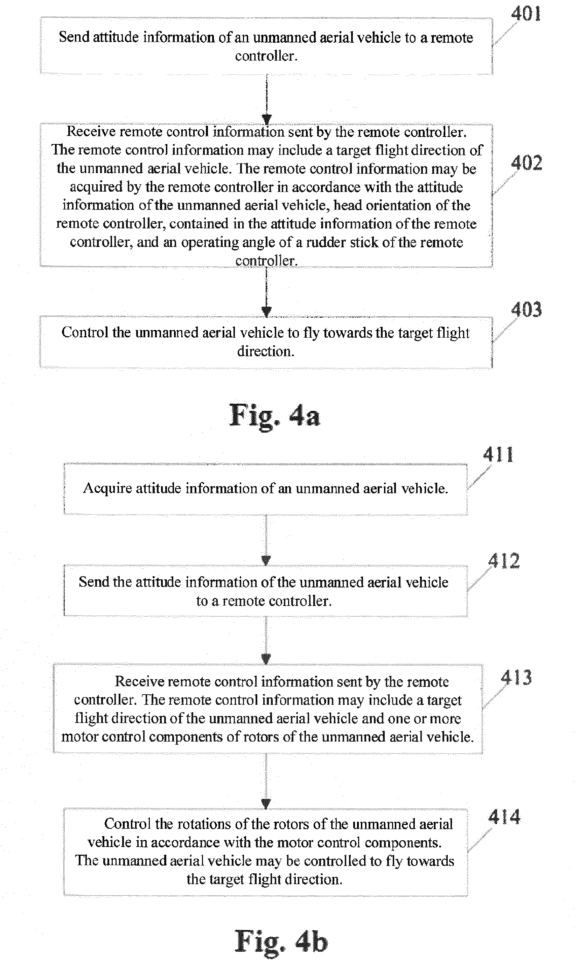

Fig. 4a is a schematic flow chart of a control method of headless mode for an unmanned aerial vehicle in accordance with an embodiment of the present invention. As shown in Fig. 4a, a control method of headless mode for an unmanned aerial vehicle may be applied to a flight controller at an unmanned aerial vehicle side, which may include:
Step 401: Sending attitude information of an unmanned aerial vehicle to a remote controller.
Step 402: Receiving remote control information sent by the remote controller. The remote control information may include a target flight direction of the unmanned aerial vehicle. The remote control information may be acquired by the remote controller in accordance with the attitude information of the unmanned aerial vehicle, nose orientation of the remote controller, contained in the attitude information of the remote controller, and an operating angle of a rudder stick of the remote controller.
Step 403: Controlling the unmanned aerial vehicle to fly towards the target flight direction.

In the embodiment of the present invention, a flight controller of an unmanned aerial vehicle may send attitude information of the unmanned aerial vehicle to a remote controller. Then, a processor of the remote controller may obtain a target flight direction of the unmanned aerial vehicle in accordance with the attitude information of the unmanned aerial vehicle, the nose orientation of the remote controller, contained in the attitude information of the remote controller, and an operating angle of a rudder stick of the remote controller. And, the processor may directly send the target flight direction to the flight controller. Accordingly, the flight controller may control the unmanned aerial vehicle to fly towards the target flight direction. That is, in the embodiment of the present invention, the processor at the remote controller may acquire the target flight direction of the unmanned aerial vehicle.

As shown in Fig. 4b, a control method of headless mode for an unmanned aerial vehicle control method may include:
Step 411: Acquiring attitude information of an unmanned aerial vehicle.
Step 412: Sending the attitude information of the unmanned aerial vehicle to a remote controller.
Step 413: Receiving remote control information sent by the remote controller. The remote control information may include a target flight direction of the unmanned aerial vehicle and one or more motor control components of rotors of the unmanned aerial vehicle.

The remote control information may be acquired by the remote controller in accordance with the attitude information of the unmanned aerial vehicle, the nose orientation of the remote controller, contained in the attitude information of the remote controller, and an operating angle of a rudder stick of the remote controller.

The method of acquiring the target flight direction of the unmanned aerial vehicle and the motor control components of the rotors of the unmanned aerial vehicle by the processor at the remote controller side may be the same as the acquisition method of the flight controller at the unmanned aerial vehicle. Reference can be made to Fig. 3a to Fig. 3d for details, and the acquisition method is not repeated herein.

Step 414: Controlling the rotations of the rotors of the unmanned aerial vehicle in accordance with the motor control components. The unmanned aerial vehicle may be controlled to fly towards the target flight direction.

It can be seen that, in the embodiment of the present invention, a flight controller at an unmanned aerial vehicle may send acquired attitude information of the unmanned aerial vehicle to a processor at a remote controller. Then, the processor may calculate a target flight direction of the unmanned aerial vehicle and one or more motor control components of rotors of the unmanned aerial vehicle in accordance with the attitude information of the unmanned aerial vehicle, the attitude information of the remote controller, and an operating angle of a rudder stick of the remote controller. The processor at the remote controller then may make the target flight direction and the motor control components of the rotors of the unmanned aerial vehicle to be carried in remote control information and sent to the flight controller. Finally, the flight controller may control the rotors of the unmanned aerial vehicle to rotate through the motor control components to control the unmanned aerial vehicle to fly towards the target flight direction.

In addition, the positioner may further acquire geographic position information of the unmanned aerial vehicle. Then, the geographic position information of the unmanned aerial vehicle may be sent to the remote controller, so that the remote controller may determine a target flight direction of the unmanned aerial vehicle in accordance with the geographic position information of the unmanned aerial vehicle, geographic position information of the remote controller and nose orientation in attitude information of the unmanned aerial vehicle. A specific determination method will be introduced in detail in the following embodiment of the remote controller, which is not repeated herein.

In addition, in the embodiment of the present invention, it may be also feasible to dynamically set a return point and control the unmanned aerial vehicle to return. Therefore, the unmanned aerial vehicle may also receive return indication information sent by the remote controller. The return indication information may include geographic position information of the remote controller. Then, the unmanned aerial vehicle may be controlled to fly towards a geographic position indicated by the geographic position information of the remote controller. Reference can be made to the embodiment shown in Fig. 3 for details, which is not repeated herein.

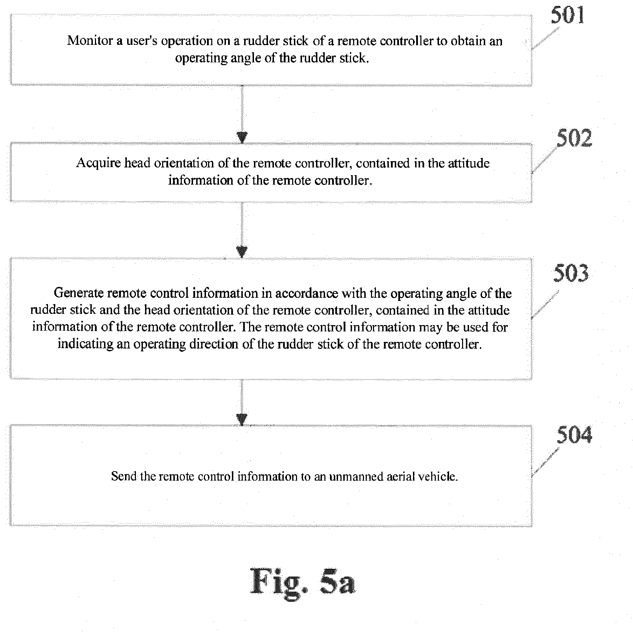

Fig. 5a is a schematic flow chart of a control method of headless mode for an unmanned aerial vehicle in accordance with an embodiment of the present invention. As shown in Fig. 5a, a control method of headless mode for an unmanned aerial vehicle may be applied to a processor at a remote controller, which, in combination with Fig. 1, may include:
Step 501: Monitoring a user's operation on a rudder stick of a remote controller to obtain an operating angle of the rudder stick.

The processor at the remote controller may monitor the user's operation on the remote controller in real time, including an operation on the rudder stick of the remote controller, an operation of starting the buttons on the remote controller, and so on.

Step 502: Acquiring nose orientation of the remote controller, contained in the attitude information of the remote controller.

The processor may further acquire nose orientation of the remote controller, contained in the attitude information of the remote controller.

Step 503: Generating remote control information in accordance with the operating angle of the rudder stick and the nose orientation of the remote controller, contained in the attitude information of the remote controller. The remote control information may be used for indicating an operating direction of the rudder stick of the remote controller.

Step 504: Sending the remote control information to an unmanned aerial vehicle.

In the embodiment of the present invention, a flight controller at an unmanned aerial vehicle may acquire a target flight direction of the unmanned aerial vehicle (a specific acquisition method is described in detail in Fig. 3a to Fig. 3d, and is not repeated herein). Therefore, a processor at a remote controller may need to send attitude information of the remote controller and an operating angle of a rudder stick to the flight controller.

It can be seen that, in the embodiment of the present invention, a control apparatus of unmanned aerial vehicle in a remote controller, by monitoring a user's operation on a rudder stick, may obtain an operating angle of the rudder stick. Then, the nose orientation of the remote controller, contained in the attitude information of the remote controller, may be acquired as well. Remote control information may be then generated in accordance with the operating angle of the rudder stick and the nose orientation of the remote controller, contained in the attitude information of the remote controller. The remote control information may indicate an operating direction of the rudder stick of the remote controller and may be sent to the unmanned aerial vehicle. The control apparatus of unmanned aerial vehicle at the unmanned aerial vehicle may obtain a target flight direction of the unmanned aerial vehicle in accordance with the remote control information. The target flight direction may be equal to the operating direction of the rudder stick of the remote controller. Smart control in a headless mode is achieved by making the flight direction of the unmanned aerial vehicle to be equal to the operating direction of the rudder stick. Accordingly, remote control operations may be simplified. Operational difficulty of remote control over the unmanned aerial vehicle may be reduced. And, user experience may be improved.

In some embodiments, the generating remote control information in accordance with the operating angle of the rudder stick and the nose orientation of the remote controller, contained in the attitude information of the remote controller, may include: monitoring the user's operation on the rudder stick of the remote controller to acquire a channel value corresponding to the rudder stick of the remote controller; obtaining the operating angle of the rudder stick of the remote controller in accordance with the channel value; and generating the remote control information in accordance with the operating angle of the rudder stick of the remote controller and the nose orientation of the remote controller, contained in the attitude information of the remote controller .

It can be understood that the remote controller may be generally provided with 8 channels. Each channel may correspond to one channel value, and each channel value is different. The operation on the rudder stick of the remote controller is to shift the rudder stick onto the corresponding channel. The control apparatus of unmanned aerial vehicle of the remote controller may acquire the channel value. And then, a trigonometric function of the channel value is calculated to obtain the *θ* in Fig. 3a, i.e. the operating angle of the rudder stick of the remote controller.

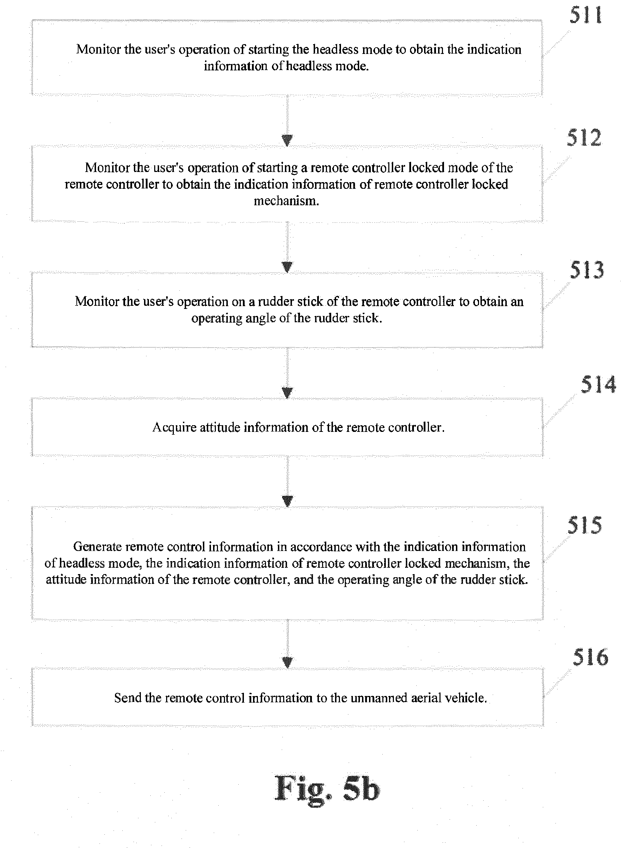

Fig. 5b is a schematic flow chart of a control method of headless mode for an unmanned aerial vehicle in accordance with another embodiment of the present invention. As shown in Fig. 5b, a control method of headless mode for an unmanned aerial vehicle may include:
Step 511: Monitoring the user's operation of starting the headless mode to obtain the indication information of headless mode.
Step 512: Monitoring the user's operation of starting a remote controller locked mode of the remote controller to obtain the indication information of remote controller locked mechanism.
Step 513: Monitoring the user's operation on a rudder stick of the remote controller to obtain an operating angle of the rudder stick.
Step 514: Acquiring attitude information of the remote controller.
Step 515: Generating remote control information in accordance with the indication information of headless mode, the indication information of remote controller locked mechanism, the attitude information of the remote controller, and the operating angle of the rudder stick.
Step 516: Sending the remote control information to the unmanned aerial vehicle.

It should be noted that, in the embodiment of the present invention, when the target flight direction of the unmanned aerial vehicle may be calculated, all contents contained in the attitude information of the remote controller may be taken into account. For example, the nose orientation, a pitch angle, and a roll angle of the remote controller may be all taken into account in the calculation.

It can be seen that, in the embodiment of the present invention, a remote controller may detect a user's operation on the remote controller, specifically including a starting operation of a headless mode, starting a remote controller locked mode, and an operation on a rudder stick, to obtain the indication information of headless mode, the indication information of remote controller locked mechanism, the attitude information of the remote controller, and the operating angle of the rudder stick of the remote controller. These information contents may be carried in remote control information sent to the unmanned aerial vehicle. The unmanned aerial vehicle may start a corresponding program in accordance with the remote control information and may obtain a target flight direction in accordance with geographic position information and the operating angle of the rudder stick of the remote controller. The unmanned aerial vehicle may be controlled to fly towards the target flight direction accordingly.

At the remote controller, geographic position information of the remote controller may be further acquired through a positioner. The geographic position information of the remote controller may be carried in the remote control information to be sent to the unmanned aerial vehicle. It may enable the unmanned aerial vehicle to determine the target flight direction of the unmanned aerial vehicle by a combination of the geographic position information of the remote controller and the nose orientation of the remote controller, contained in attitude information of the remote controller. A specific determination method has been described in detail in the embodiment shown in Fig. 3e. It is not repeated herein.

In addition, in the embodiment of the present invention, it may be also feasible to dynamically set a return point and control the unmanned aerial vehicle to return. When the unmanned aerial vehicle may be required to return, it may be feasible to trigger a return-point lock mode by starting a related button on the remote controller. or whenever the remote controller is turned off. The remote controller may send remote control information to the unmanned aerial vehicle. The remote control information may include return instruction information. The return instruction information may at least include geographic position information of the remote controller. Therefore, in the embodiment of the present invention, the geographic position of the remote controller can be used as a return point, to achieve dynamic setting of the return point.

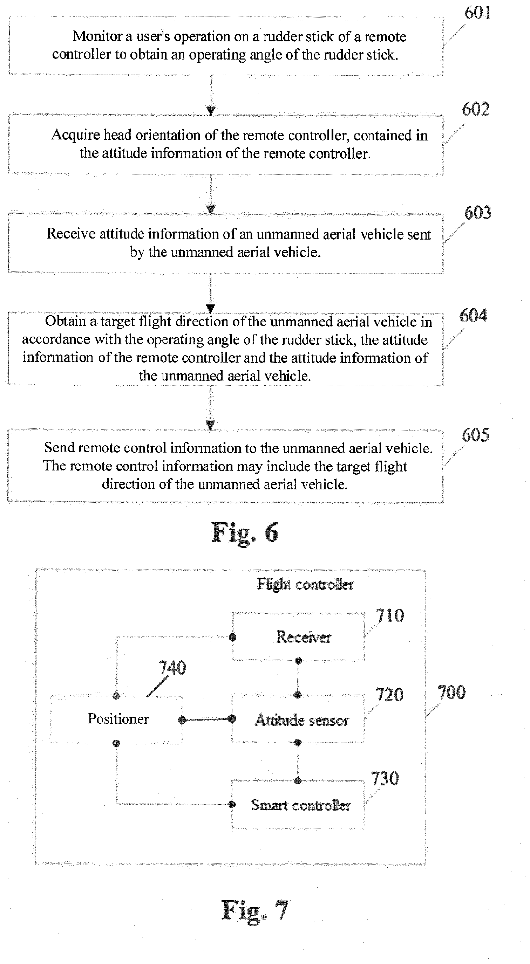

Fig. 6 is a schematic flow chart of a control method of headless mode for an unmanned aerial vehicle in accordance with an embodiment of the present invention. As shown in Fig. 6, a control method of headless mode for an unmanned aerial vehicle may include:
Step 601: Monitoring a user's operation on a rudder stick of a remote controller to obtain an operating angle of the rudder stick.
Step 602: Acquiring nose orientation of the remote controller, contained in the attitude information of the remote controller.
Step 603: Receiving attitude information of an unmanned aerial vehicle sent by the unmanned aerial vehicle.

There is no execution sequence between steps 602 and 603.

Step 604: Obtaining a target flight direction of the unmanned aerial vehicle in accordance with the operating angle of the rudder stick, the attitude information of the remote controller and the attitude information of the unmanned aerial vehicle.

Step 605: Sending remote control information to the unmanned aerial vehicle. The remote control information may include the target flight direction of the unmanned aerial vehicle.

In the embodiment of the present invention, a processor at the remote controller may acquire the target flight direction of the unmanned aerial vehicle. The target flight direction may be then directly sent to the flight controller at the unmanned aerial vehicle. And, the flight controller may directly control the unmanned aerial vehicle to fly towards the target flight direction.

Further, the monitoring a user's operation on a rudder stick of a remote controller to obtain an operating angle of the rudder stick in step 601 may include: monitoring the user's operation on the rudder stick of the remote controller to acquire a channel value corresponding to the rudder stick of the remote controller; and obtaining the operating angle of the rudder stick of the remote controller in accordance with the channel value.

The obtaining the operating angle of the rudder stick of the remote controller in accordance with the channel value refers to obtaining the operating angle of the rudder stick of the remote controller by calculating trigonometric function on the channel value.

In some embodiments of the present invention, step 604 may include steps shown in Fig. 2, and a specific calculation process thereof may be as shown in Figs. 3a-3c, which is not repeated herein.

In addition, the remote control information in accordance with the embodiment of the present invention may further include one or more motor control components of rotors of the unmanned aerial vehicle. Therefore, after the target flight direction of the unmanned aerial vehicle may be determined equal to the operating direction of the rudder stick of the remote controller, it may be also feasible to acquire the motor control components of the rotors of the unmanned aerial vehicle in accordance with the steps shown in Fig. 3d.

In some embodiments of the present invention, the remote controller may further receive geographic position information of the unmanned aerial vehicle sent by the unmanned aerial vehicle, and then step 604 may include the following steps:
Step S1: Acquiring geographic position information of the remote controller.
Step S2: Determining a relative position between the unmanned aerial vehicle and the remote controller in accordance with the geographic position information of the remote controller, the nose orientation of the remote controller, contained in the attitude information of the remote controller, and the geographic position of the unmanned aerial vehicle.
Step S3: Determining the target flight direction of the unmanned aerial vehicle in accordance with the relative position and the operating angle of the rudder stick of the remote controller.

The physical location of the remote controller and the nose orientation thereof can be determined in accordance with the geographic position information of the remote controller and the nose orientation of the remote controller, contained in the attitude information of the remote controller. Then, the relative position between the unmanned aerial vehicle and the remote controller may be determined in accordance with the geographic position information of the unmanned aerial vehicle. The relative position may refer to that the unmanned aerial vehicle is in front of the head of the remote controller or in the back of the head of the remote controller.

It should be noted that, in the embodiment of the present invention, the operating angle of the rudder stick of the remote controller may be 90 degrees or 360 degrees. Only two channels on the remote controller may be used. That is, the operating direction of the rudder stick may be the direction of the nose orientation of the remote controller or the opposite direction of the nose orientation of the remote controller.

In accordance with that the unmanned aerial vehicle is in front of or in the back of the head of the remote controller determined in step S3, the target flight direction of the unmanned aerial vehicle may include the following situations:
1. If the unmanned aerial vehicle is in front of the head of the remote controller and the operating direction of the rudder stick is the direction of the nose orientation of the remote controller, the target flight direction of the unmanned aerial vehicle may be determined as away from the remote controller. The unmanned aerial vehicle may fly in accordance with a direction indicated by the operating direction of the rudder stick. Accordingly, it may fly away from the remote controller.
2. If the unmanned aerial vehicle is in front of the head of the remote controller and the operating direction of the rudder stick is the opposite direction of the nose orientation of the remote controller, the target flight direction of the unmanned aerial vehicle may be determined as towards the remote controller. The unmanned aerial vehicle may fly in accordance with a direction indicated by the operating direction of the rudder stick. Accordingly, it may fly close to the remote controller;
3. If the unmanned aerial vehicle is in the back of the head of the remote controller and the operating direction of the rudder stick is the direction of the nose orientation of the remote controller, the target flight direction of the unmanned aerial vehicle may be determined as towards the remote controller. The unmanned aerial vehicle may fly in accordance with a direction indicated by the operating direction of the rudder stick. Accordingly, it may fly close to the remote controller.
4. If the unmanned aerial vehicle is in the back of the head of the remote controller and the operating direction of the rudder stick is the opposite direction of the nose orientation of the remote controller, the target flight direction of the unmanned aerial vehicle may be determined as away from the remote controller. The unmanned aerial vehicle may fly in accordance with a direction indicated by the operating direction of the rudder stick. Accordingly, it may fly away from the remote controller.

In addition, when the unmanned aerial vehicle may be required to return, return instruction information may be sent to the unmanned aerial vehicle. The return instruction information may include geographic position information of the remote controller. Then, the unmanned aerial vehicle may be controlled to fly towards a geographic position indicated by the geographic position information of the remote controller to return to the return point.

As shown in Fig. 7, in an embodiment of the present invention, a flight controller 700 corresponding to the control method of headless mode for an unmanned aerial vehicle as shown in Fig. 1 may be further provided. The flight controller 700 may include:
A receiver 710 configured to receive remote control information sent by a remote controller. The remote control information may include nose orientation of the remote controller, contained in the attitude information of the remote controller, and an operating angle of a rudder stick of the remote controller. The remote control information may be used for indicating an operating direction of the rudder stick of the remote controller.

An attitude sensor 720 configured to acquire attitude information of an unmanned aerial vehicle.

A smart controller 730 configured to determine a target flight direction of the unmanned aerial vehicle in accordance with the remote control information and the attitude information of the unmanned aerial vehicle, and control the unmanned aerial vehicle to fly towards the target flight direction. The target flight direction may be equal to the operating direction of the rudder stick.

In the embodiment of the present invention, a receiver 710 may receive remote control information from a remote controller. The remote control information may be used for indicating an operating direction of the rudder stick of the remote controller. An attitude sensor 720 may be configured to acquire attitude information of an unmanned aerial vehicle. Then, a smart controller 730 may be configured to determine a target flight direction of the unmanned aerial vehicle in accordance with the remote control information and the attitude information of the unmanned aerial vehicle. The target flight direction may be equal to the operating direction of the rudder stick indicated by the remote control information. And then, the smart controller 730 may control the unmanned aerial vehicle to fly towards the target flight direction. Accordingly, it may achieve smart control of remote control, reduce operational difficulty of the remote control, and improve user experience.

Furthermore, the smart controller 730 may be configured to set up a coordinate system of the remote controller in accordance with the nose orientation of the remote controller, contained in the attitude information of the remote controller, and set up a coordinate system of the unmanned aerial vehicle in accordance with the attitude information of the unmanned aerial vehicle. The origins of the two coordinate systems coincide with the origin of a geographic coordinate system, the smart controller 730 may also be configured to identify the operating direction of the rudder stick of the remote controller in the coordinate system of the remote controller in accordance with the operating angle of the rudder stick of the remote controller, and determine the target flight direction of the unmanned aerial vehicle is equal to the operating direction of the rudder stick of the remote controller.

Furthermore, in some embodiments, the smart controller 730 may also be configured to set up the coordinate system of the remote controller in accordance with the attitude information of the remote controller. The attitude information of the remote controller may include the nose orientation, a pitch angle, and a roll angle of the remote controller.

Furthermore, in some embodiments, the smart controller 730 may be configured to acquire an angle between a horizontal axis of the coordinate system of the unmanned aerial vehicle and the target flight direction, and acquire one or more motor control components of rotors of the unmanned aerial vehicle in accordance with the angle. The smart controller 730 may also be configured to control the rotors of the unmanned aerial vehicle to rotate in accordance with the one or more motor control components. The unmanned aerial vehicle may be controlled to fly towards the target flight direction accordingly.

It should be noted that, as the embodiment of the present invention may achieve the functions corresponding to the lock mechanism of remote control apparatus, the remote controller may need to carry indication information of headless mode and indication information of remote controller locked mechanism in the remote control information. The smart controller 730 may be further configured to start a headless mode corresponding to the indication information of headless mode and a remote controller locked mode indicated by the indication information of remote controller locked mechanism.

In some embodiments of the present invention, the remote control information may further include geographic position information of a remote controller. The flight controller 700 may further include:
A positioner 740 configured to acquire geographic position information of the unmanned aerial vehicle.

The smart controller 730 may be further configured to determine a relative position between the unmanned aerial vehicle and the remote controller in accordance with the geographic position information of the unmanned aerial vehicle, the geographic position information of the remote controller and the nose orientation in the attitude information of the remote controller. The smart controller 730 may be even further configured to determine the target flight direction of the unmanned aerial vehicle in accordance with the relative position and the operating angle of the rudder stick of the remote controller.

In some embodiments of the present invention, the receiver 710 may be further configured to receive return instruction information sent by the remote controller. The return instruction information including the geographic position information of the remote controller.

The smart controller 730 may be further configured to control the unmanned aerial vehicle to fly towards a geographic position indicated by the geographic position information of the remote controller.

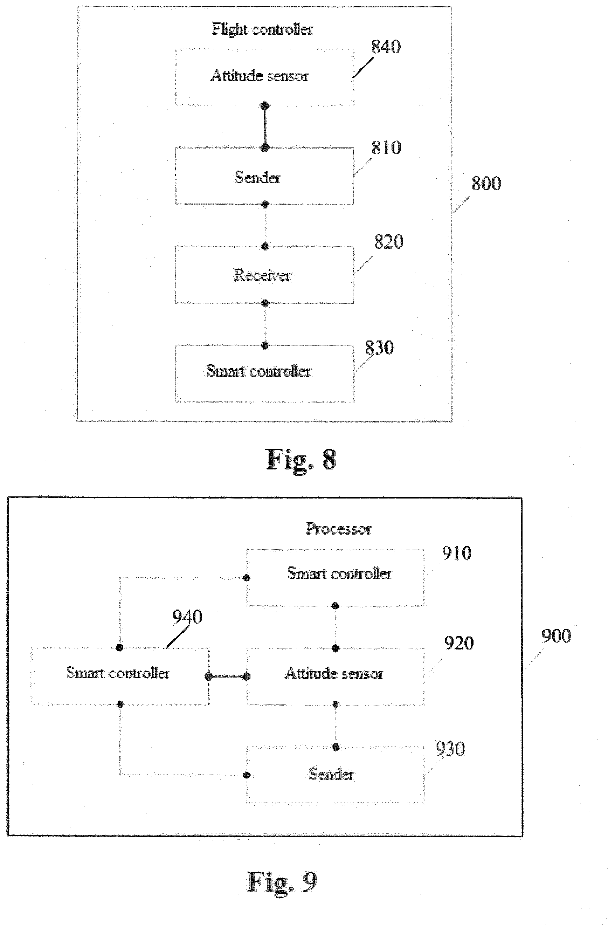

As shown in Fig. 8, in another embodiment of the present invention, a flight controller 800 corresponding to the control method of headless mode for an unmanned aerial vehicle as shown in Fig. 4a is further provided. The flight controller 800 may include:
A transmitter 810 configured to send attitude information of an unmanned aerial vehicle to a remote controller.
A receiver 820 configured to receive remote control information sent by the remote controller. The remote control information may include a target flight direction of the unmanned aerial vehicle. The remote control information may be acquired by the remote controller in accordance with the attitude information of the unmanned aerial vehicle, nose orientation of the remote controller, contained in the attitude information of the remote controller, and an operating angle of a rudder stick of the remote controller.
A smart controller 830 configured to control the unmanned aerial vehicle to fly towards the target flight direction.

It can be seen that, in the embodiment of the present invention, the flight controller 800 may send attitude information of the unmanned aerial vehicle to a processor at the remote controller. And, the processor may calculate a target flight direction of the unmanned aerial vehicle.

Furthermore, the flight controller 800 may further include an attitude sensor 840 configured to acquire the attitude information of the unmanned aerial vehicle before the attitude information of the unmanned aerial vehicle is sent to the remote controller.

Furthermore, if the remote control information may further include one or more motor control components of rotors of the unmanned aerial vehicle, the smart controller 830 may be further configured to control the rotors of the unmanned aerial vehicle to rotate in accordance with the one or more motor control components. The unmanned aerial vehicle may be controlled to fly towards the target flight direction accordingly.

In some embodiments of the present invention, the receiver 820 may be configured to receive return indication information sent by the remote controller. The return indication information may include geographic position information of the remote controller.

The smart controller 830 may be further configured to control the unmanned aerial vehicle to fly towards a geographic position indicated by the geographic position information of the remote controller.

As shown in Fig. 9, in another embodiment of the present invention, a processor 900 corresponding to the headless mode based unmanned aerial vehicle control method as shown in Fig. 5a is further provided. The processor 900 may include:
A smart controller 910 configured to monitor a user's operation on a rudder stick of a remote controller to obtain an operating angle of the rudder stick.

An attitude sensor 920 configured to acquire nose orientation of the remote controller, contained in the attitude information of the remote controller.

The smart controller 910 may be further configured to generate remote control information in accordance with the operating angle of the rudder stick and the attitude information of the remote controller. The remote control information may be used for indicating an operating direction of the rudder stick of the remote controller.

A transmitter 930 configured to send the remote control information to the unmanned aerial vehicle.

It can be seen that a smart controller 910, by monitoring a user's operation on a rudder stick, may obtain an operating angle of the rudder stick. An attitude sensor 920 may acquire nose orientation of the remote controller, contained in the attitude information of the remote controller. Then, the smart controller 910 may generate remote control information in accordance with the operating angle of the rudder stick and the attitude information of the remote controller. The remote control information may be used for indicating an operating direction of the rudder stick of the remote controller. Then, a transmitter 930 may send the remote control information to the unmanned aerial vehicle. A flight controller of the unmanned aerial vehicle may obtain a target flight direction of the unmanned aerial vehicle in accordance with the remote control information. The target flight direction may be equal to the operating direction of the rudder stick of the remote controller. Smart control in a headless mode may be achieved by making the flight direction of the unmanned aerial vehicle to be equal to the operating direction of the rudder stick. Accordingly, remote control operations may be simplified. Operational difficulty of the remote control may be reduced. And, user experience may be improved.

The smart controller 910 may be configured to monitor the user's operation on the rudder stick of the remote controller to acquire a channel value corresponding to the rudder stick of the remote controller. The smart controller 910 may also be configured to obtain the operating angle of the rudder stick of the remote controller in accordance with the channel value.

Furthermore, the smart controller 910 may be configured to obtain the operating angle of the rudder stick of the remote controller by calculating trigonometric function on the channel value.

Furthermore, the smart controller 910 may be configured to generate the remote control information in accordance with the indication information of headless mode, the indication information of remote controller locked mechanism, the operating angle of the rudder stick, and the attitude information of the remote controller.

In some embodiments of the present invention, the processor 900 may further include:
a positioner 940 configured to acquire geographic position information of the remote controller. The remote control information may further include the geographic position information of the remote controller.

After remote control information may be generated in accordance with the geographic position information of the remote controller acquired by the positioner 940 and other information, the remote control information may be sent to the unmanned aerial vehicle. The unmanned aerial vehicle may determine a flight direction of the unmanned aerial vehicle in accordance with the geographic position information of the unmanned aerial vehicle, the geographic position information of the remote controller, and the nose orientation in the attitude information of the remote controller. A specific flight direction is described in detail in the embodiment shown in Fig. 3e, which is not repeated herein.

In some embodiments of the present invention, the transmitter 930 may be further configured to send return instruction information to the unmanned aerial vehicle. The return instruction information may include the geographic position information of the remote controller.

When the unmanned aerial vehicle may need to return, the geographic position of the remote controller may be used as a return point of the unmanned aerial vehicle, and the unmanned aerial vehicle may be controlled to return.

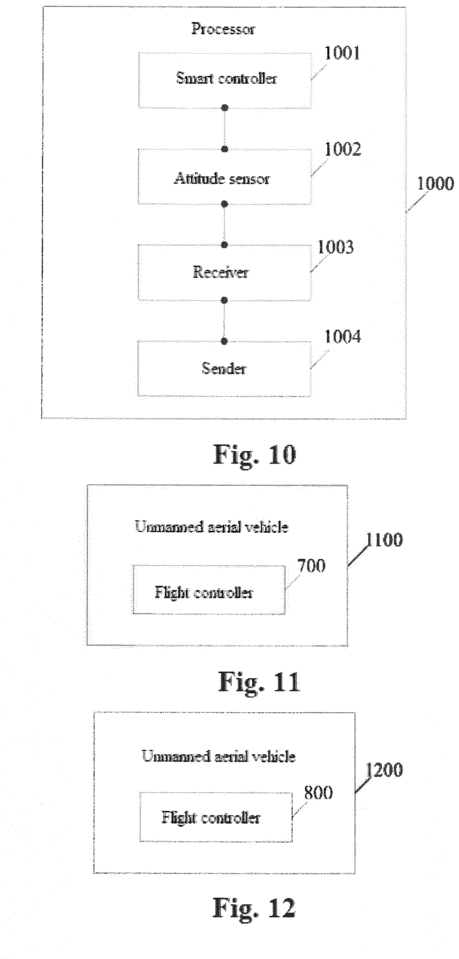

As shown in Fig. 10, in another embodiment of the present invention, a processor 1000 corresponding to the headless mode based unmanned aerial vehicle control method as shown in Fig. 6a is further provided. The processor 1000 may include:
A smart controller 1001 configured to monitor a user's operation on a rudder stick of a remote controller to obtain an operating angle of the rudder stick.

An attitude sensor 1002 configured to acquire nose orientation of the remote controller, contained in the attitude information of the remote controller.

A receiver 1003 configured to receive attitude information of an unmanned aerial vehicle sent by the unmanned aerial vehicle.

The smart controller 1001 may be further configured to obtain a target flight direction of the unmanned aerial vehicle in accordance with the operating angle of the rudder stick, the attitude information of the remote controller and the attitude information of the unmanned aerial vehicle.

A transmitter 1004 configured to send remote control information to the unmanned aerial vehicle. The remote control information may include the target flight direction of the unmanned aerial vehicle.

Furthermore, the smart controller 1001 may be configured to monitor the user's operation on the rudder stick of the remote controller to acquire a channel value corresponding to the rudder stick of the remote controller. The smart controller 1001 may also be configured to obtain the operating angle of the rudder stick of the remote controller in accordance with the channel value.

Furthermore, the smart controller 1001 may be configured to obtain the operating angle of the rudder stick of the remote controller by calculating trigonometric function on the channel value.

Furthermore, the smart controller 1001 may be configured to set up a coordinate system of the remote controller in accordance with the nose orientation of the remote controller, contained in the attitude information of the remote controller, and setting up a coordinate system of the unmanned aerial vehicle in accordance with the attitude information of the unmanned aerial vehicle. The origins of the two coordinate systems coincide with the origin of a geographic coordinate system. The smart controller 1001 may also be configured to identify the operating direction of the rudder stick of the remote controller in the coordinate system of the remote controller in accordance with the operating angle of the rudder stick of the remote controller, and determine the target flight direction of the unmanned aerial vehicle is equal to the operating direction of the rudder stick of the remote controller.

Furthermore, the smart controller 1001 may be configured to set up the coordinate system of the remote controller in accordance with the attitude information of the remote controller. The attitude information of the remote controller may include nose orientation, a pitch angle and a roll angle of the remote controller.

Furthermore, the remote control information in accordance with the embodiment of the present invention may further include one or more motor control components of rotors of the unmanned aerial vehicle. The smart controller 1001 may be configured to acquire an angle between a horizontal axis of the coordinate system of the unmanned aerial vehicle and the target flight direction, and acquire the one or more motor control components of the rotors of the unmanned aerial vehicle in accordance with the angle.

In some implementable modes of the present invention, the receiver 1003 may be further configured to receive geographic position information of the unmanned aerial vehicle sent by the unmanned aerial vehicle.

Therefore, the smart controller 1001 may be further configured to acquire geographic position information of the remote controller and determine relative positions of the unmanned aerial vehicle and the remote controller in accordance with the geographic position information of the remote controller, the nose orientation of the remote controller, contained in the attitude information of the remote controller, and a geographic position of the unmanned aerial vehicle. The smart controller 1001 may be further configured to determine the target flight direction of the unmanned aerial vehicle in accordance with the relative positions and the operating angle of the rudder stick of the remote controller.

In some embodiments of the present invention, the transmitter 1004 may be further configured to send return indication information to the unmanned aerial vehicle. The return indication information may include the geographic position information of the remote controller.

As shown in Fig. 11, in an embodiment of the present invention, an unmanned aerial vehicle 1100 is provided, which may include the flight controller 700 as shown in Fig. 7.

Herein, the unmanned aerial vehicle 1100 is no longer introduced. Reference can be made to the detailed descriptions to the flight controller 700 in combination with the method embodiments for specific contents.

As shown in Fig. 12, in another embodiment of the present invention, an unmanned aerial vehicle 1200 is further provided, which may include the flight controller 800 as shown in Fig. 8.

Herein, the unmanned aerial vehicle 1200 is no longer introduced. Reference can be made to the detailed descriptions to the flight controller 800 in combination with the method embodiment for specific contents.

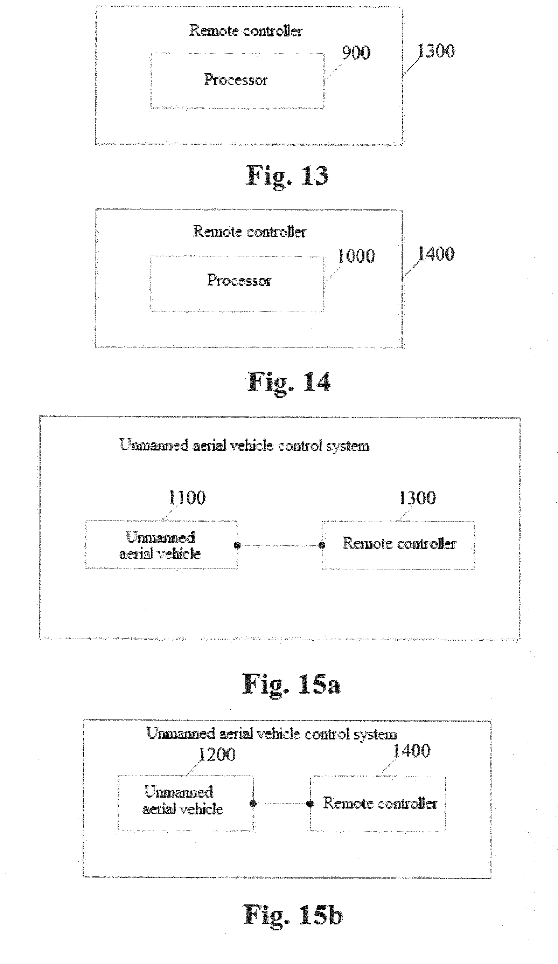

As shown in Fig. 13, in an embodiment of the present invention, a remote controller 1300 is provided, which may include the processor 900 as shown in Fig. 9.

Herein, the remote controller 1300 is no longer introduced. Reference can be made to the detailed descriptions to the processor 900 in combination with the method embodiment for specific contents.

As shown in Fig. 14, in an embodiment of the present invention, a remote controller 1400 is provided, which may include the processor 1000 as shown in Fig. 10.

Herein, the remote controller 1400 is no longer introduced. Reference can be made to the detailed descriptions to the processor 1000 in combination with the method embodiment for specific contents.

In addition, in an embodiment of the present invention, a control system of unmanned aerial vehicle may include:
As shown in Fig. 15a, the system may include the unmanned aerial vehicle 1100 as shown in Fig. 11 and the remote controller 1300 as shown in Fig. 13;

Or, as shown in Fig. 15b, the system may include the unmanned aerial vehicle 1300 as shown in Fig. 12 and the remote controller 1400 as shown in Fig. 14.

Reference can be made to the descriptions of the method embodiments and the embodiments of the unmanned aerial vehicle and the remote controller for specific contents.

In the above embodiments, the description of each embodiment has its own focus. For the content that is not detailed in a certain embodiment, reference can be made to the relevant description of other embodiments.

Persons skilled in the art can clearly understand that, reference can be made to the corresponding process in the foregoing method embodiments for the specific working procedures of the systems, the devices and the units described above, and will not be repeated herein in order to make the description convenient and concise.

The headless mode based unmanned aerial vehicle control method and apparatus in accordance with the present invention are described in details above. Persons of ordinary skill in the art can make variations to the present invention in terms of the specific implementation modes and application scopes in accordance with the ideas of the embodiments of the present invention. Therefore, the specification shall not be construed as limitations to the present invention.

## Claims

1. A control method of headless mode for an unmanned aerial vehicle (1100, 1200), the control method comprising:
selecting one of at least a first operating mode and a second operating mode for the unmanned aerial vehicle,
wherein, when the first operating mode is selected, the control method further comprises:
receiving remote control information sent by a remote controller (1300, 1400), wherein the remote control information is used for indicating an operating direction of a rudder stick of the remote controller, and includes nose orientation of the remote controller, contained in attitude information of the remote controller, and the operating angle of the rudder stick of the remote controller;
acquiring attitude information of the unmanned aerial vehicle (1100, 1200);
determining a target flight direction of the unmanned aerial vehicle (1100, 1200) in accordance with the remote control information and the attitude information of the unmanned aerial vehicle, wherein the target flight direction is equal to the operating direction of the rudder stick of the remote controller (1300, 1400); and
controlling the unmanned aerial vehicle (1100, 1200) to fly towards the target flight direction,
and wherein, when the second operating mode is selected, the control method further comprises:
receiving remote control information sent by a remote controller (1300, 1400), wherein the remote control information includes nose orientation of the remote controller, contained in attitude information of the remote controller, an operating angle of a rudder stick of the remote controller, and geographic position information of the remote controller;
acquiring geographic position information of the unmanned aerial vehicle (1100, 1200);
determining a relative position between the unmanned aerial vehicle (1100, 1200) and the remote controller (1300, 1400) in accordance with the geographic position information of the unmanned aerial vehicle, the geographic position information of the remote controller, and the nose orientation of the remote controller, contained in the attitude information of the remote controller;
determining a target flight direction of the unmanned aerial vehicle (1100, 1200) in accordance with the relative position and the operating angle of the rudder stick of the remote controller (1300, 1400); and
controlling the unmanned aerial vehicle (1100, 1200) to fly towards the target flight direction,
and wherein, when the second operating mode is selected:
the relative position refers to that the unmanned aerial vehicle (1100, 1200) is in front of the nose of the remote controller (1300, 1400) or in the back of the nose of the remote controller (1300, 1400),
the operating angle of the rudder stick of the remote controller (1300, 1400) is the direction of the nose orientation of the remote controller (1300, 1400) or the opposite direction of the nose orientation of the remote controller (1300, 1400), and
i) when the unmanned aerial vehicle (1100, 1200) is in front of the nose of the remote controller (1300, 1400) and the operating angle of the rudder stick is the direction of the nose orientation of the remote controller (1300, 1400), the target flight direction of the unmanned aerial vehicle (1100, 1200) is determined as away from the remote controller (1300, 1400);
ii) when the unmanned aerial vehicle (1100, 1200) is in front of the nose of the remote controller (1300, 1400) and the operating angle of the rudder stick is the opposite direction of the nose orientation of the remote controller (1300, 1400), the target flight direction of the unmanned aerial vehicle (1100, 1200) is determined as towards the remote controller (1300, 1400);
iii) when the unmanned aerial vehicle (1100, 1200) is in the back of the nose of the remote controller (1300, 1400) and the operating angle of the rudder stick is the direction of the nose orientation of the remote controller (1300, 1400), the target flight direction of the unmanned aerial vehicle (1100, 1200) is determined as towards the remote controller (1300, 1400); and
iv) when the unmanned aerial vehicle (1100, 1200) is in the back of the nose of the remote controller (1300, 1400) and the operating angle of the rudder stick is the opposite direction of the nose orientation of the remote controller (1300, 1400), the target flight direction of the unmanned aerial vehicle (1100, 1200) is determined as away from the remote controller (1300, 1400).

2. The control method of claim 1, wherein, when the first operating mode is selected,
determining the target flight direction of the unmanned aerial vehicle (1100, 1200) in accordance with the remote control information and the attitude information of the unmanned aerial vehicle includes:
setting up a first coordinate system of the remote controller (1300, 1400) in accordance with the nose orientation of the remote controller, contained in the attitude information of the remote controller, wherein the origin of the first coordinate system coincides with the origin of a geographic coordinate system; and
identifying the operating direction of the rudder stick of the remote controller (1300, 1400) in the first coordinate system of the remote controller in accordance with the operating angle of the rudder stick of the remote controller, wherein the operating direction of the rudder stick of the remote controller is the target flight direction of the unmanned aerial vehicle (1100, 1200).

3. The control method of claim 2, wherein, when the first operating mode is selected,
controlling the unmanned aerial vehicle (1100, 1200) to fly towards the target flight direction includes:
setting up a second coordinate system of the unmanned aerial vehicle (1100, 1200) in accordance with the attitude information of the unmanned aerial vehicle, wherein the origin of the second coordinate systems coincides with the origin of the geographic coordinate system; and
acquiring a target angle between the horizontal axis of the second coordinate system of the unmanned aerial vehicle (1100, 1200) and the target flight direction;
acquiring one or more motor control components of rotors of the unmanned aerial vehicle (1100, 1200) in accordance with the target angle; and
controlling the rotor(s) of the unmanned aerial vehicle (1100, 1200) to rotate in accordance with the one or more motor control components, so as to control the unmanned aerial vehicle to fly towards the target flight direction.

4. The control method of claim 2 or 3, wherein, when the first operating mode is selected,
the attitude information of the remote controller further includes a pitch angle and a roll angle of the remote controller,
and wherein setting up the first coordinate system of the remote controller in accordance with the nose orientation of the remote controller, contained in the attitude information of the remote controller, includes:
setting up the first coordinate system of the remote controller (1300, 1400) in accordance with the pitch angle and the roll angle of the remote controller, contained in the attitude information of the remote controller.

5. The control method of claim 1, further comprising:
receiving return instruction information sent by the remote controller (1300, 1400), wherein the return instruction information includes geographic position information of the remote controller; and
controlling the unmanned aerial vehicle (1100, 1200) to fly towards a geographic position indicated by the geographic position information of the remote controller (1300, 1400).

6. A flight controller (700, 800) comprising a receiver (710, 820), an attitude sensor (720, 840), a positioner (740) and a smart controller (730, 830),
wherein the flight controller is configured to receive operating mode information indicating one of at least a first operating mode and a second operating mode for an unmanned aerial vehicle,
and wherein, when the operating mode information indicates the first operating mode,
the receiver (710, 820) is configured to receive remote control information sent by a remote controller (1300, 1400), wherein the remote control information is used for indicating an operating direction of a rudder stick of the remote controller, and includes nose orientation of the remote controller, contained in attitude information of the remote controller, and an operating angle of the rudder stick of the remote controller;
the attitude sensor (720, 840) is configured to acquire attitude information of the unmanned aerial vehicle (1100, 1200); and
the smart controller (730, 830) is configured to:
determine a target flight direction of the unmanned aerial vehicle (1100, 1200) in accordance with the remote control information and the attitude information of the unmanned aerial vehicle, wherein the target flight direction is equal to the operating direction of the rudder stick of the remote controller (1300, 1400); and
control the unmanned aerial vehicle (1100, 1200) to fly towards the target flight direction,
and wherein, when the operating mode information indicates the second operating mode,
the receiver (710, 820) is configured to receive remote control information sent by a remote controller (1300, 1400), wherein the remote control information includes nose orientation of the remote controller, contained in attitude information of the remote controller, an operating angle of a rudder stick of the remote controller, and geographic position information of the remote controller;
the positioner (740) is configured to acquire geographic position information of the unmanned aerial vehicle (1100, 1200); and
the smart controller is configured to:
determine a relative position between the unmanned aerial vehicle (1100, 1200) and the remote controller (1300, 1400) in accordance with the geographic position information of the unmanned aerial vehicle, the geographic position information of the remote controller, and the nose orientation of the remote controller, contained in the attitude information of the remote controller;
determine a target flight direction of the unmanned aerial vehicle (1100, 1200) in accordance with the relative position and the operating angle of the rudder stick of the remote controller (1300, 1400); and
control the unmanned aerial vehicle (1100, 1200) to fly towards the target flight direction,
and wherein, when the operating mode information indicates the second operating mode:
the relative position refers to that the unmanned aerial vehicle (1100, 1200) is in front of the nose of the remote controller (1300, 1400) or in the back of the nose of the remote controller (1300, 1400),
the operating angle of the rudder stick of the remote controller (1300, 1400) is the direction of the nose orientation of the remote controller (1300, 1400) or the opposite direction of the nose orientation of the remote controller (1300, 1400), and
i) when the unmanned aerial vehicle (1100, 1200) is in front of the nose of the remote controller (1300, 1400) and the operating angle of the rudder stick is the direction of the nose orientation of the remote controller (1300, 1400), the smart controller is configured to determine the target flight direction of the unmanned aerial vehicle (1100, 1200) as away from the remote controller (1300, 1400);
ii) when the unmanned aerial vehicle (1100, 1200) is in front of the nose of the remote controller (1300, 1400) and the operating angle of the rudder stick is the opposite direction of the nose orientation of the remote controller (1300, 1400), the smart controller is configured to determine the target flight direction of the unmanned aerial vehicle (1100, 1200) as towards the remote controller (1300, 1400);
iii) when the unmanned aerial vehicle (1100, 1200) is in the back of the nose of the remote controller (1300, 1400) and the operating angle of the rudder stick is the direction of the nose orientation of the remote controller (1300, 1400), the smart controller is configured to determine the target flight direction of the unmanned aerial vehicle (1100, 1200) as towards the remote controller (1300, 1400); and
iv) when the unmanned aerial vehicle (1100, 1200) is in the back of the nose of the remote controller (1300, 1400) and the operating angle of the rudder stick is the opposite direction of the nose orientation of the remote controller (1300, 1400), the smart controller is configured to determine the target flight direction of the unmanned aerial vehicle (1100, 1200) as away from the remote controller (1300, 1400).

7. The flight controller (700, 800) of claim 6, wherein, when the operating mode information indicates the first operating mode, the smart controller (730, 830) is further configured to:
set up a first coordinate system of the remote controller (1300, 1400) in accordance with the nose orientation of the remote controller, contained in the attitude information of the remote controller, wherein the origin of the first coordinate system coincides with the origin of a geographic coordinate system;
identify the operating direction of the rudder stick of the remote controller (1300, 1400) in the first coordinate system of the remote controller in accordance with the operating angle of the rudder stick of the remote controller;
determine the operating direction of the rudder stick of the remote controller (1300, 1400) as the target flight direction of the unmanned aerial vehicle (1100, 1200).

8. The flight controller (700, 800) of claim 7, wherein, when the operating mode information indicates the first operating mode,
the attitude information of the remote controller further includes a pitch angle and a roll angle of the remote controller,
and the smart controller (730, 830) is further configured to:
set up the first coordinate system of the remote controller (1300, 1400) in accordance with the pitch angle and the roll angle of the remote controller, contained in the attitude information of the remote controller.

9. The flight controller (700, 800) of claim 7 or 8, wherein, when the operating mode information indicates the first operating mode, the smart controller (730, 830) is further configured to:
set up a second coordinate system of the unmanned aerial vehicle (1100, 1200) in accordance with the attitude information of the unmanned aerial vehicle, wherein the origin of the second coordinate system coincides with the origin of the geographic coordinate system;
acquire a target angle between the horizontal axis of the second coordinate system of the unmanned aerial vehicle (1100, 1200) and the target flight direction;
acquire one or more motor control components of rotors of the unmanned aerial vehicle (1100, 1200) in accordance with the target angle; and
control the rotor(s) of the unmanned aerial vehicle (1100, 1200) to rotate in accordance with the one or more motor control components, so as to control the unmanned aerial vehicle to fly towards the target flight direction.

10. The flight controller (700, 800) of claim 6, wherein:
the receiver (710, 820) is further configured to receive return instruction information sent by the remote controller (1300, 1400), wherein the return instruction information includes geographic position information of the remote controller; and
the smart controller (730, 830) is further configured to control the unmanned aerial vehicle (1100, 1200) to fly towards a geographic position indicated by the geographic position information of the remote controller (1300, 1400).

11. An unmanned aerial vehicle (1100, 1200), comprising the flight controller (700, 800) in any of claims 6-10.

12. A remote controller (1300, 1400) comprising a processor (900, 1000), a smart controller (910, 1001), an attitude sensor (920, 1002), a positioner (940), a receiver (1003) and a transmitter (930, 1004),
wherein the processor (900, 1000) is configured to obtain operating mode information indicating one of at least a first operating mode and a second operating mode for an unmanned aerial vehicle (1100, 1200),
and wherein, when the operating mode information indicates the first operating mode,
the smart controller (910, 1001) is configured to:
monitor a user's operation on a rudder stick of the remote controller (1300, 1400) to obtain an operating angle of the rudder stick, and
generate remote control information in accordance with the operating angle of the rudder stick and nose orientation of the remote controller (1300, 1400), contained in attitude information of the remote controller, wherein the remote control information is used for indicating an operating direction of the rudder stick of the remote controller;
the attitude sensor (920, 1002) is configured to acquire the nose orientation of the remote controller (1300, 1400), contained in the attitude information of the remote controller;
the receiver (1003) is configured to receive attitude information of the unmanned aerial vehicle (1100, 1200) sent by the unmanned aerial vehicle (1100, 1200);
the smart controller (910, 1001) is further configured to determine a target flight direction of the unmanned aerial vehicle (1100, 1200) in accordance with the remote control information and the attitude information of the unmanned aerial vehicle, wherein the target flight direction is equal to the operating direction of the rudder stick of the remote controller (1300, 1400); and
the transmitter (930, 1004) is configured to send the remote control information to the unmanned aerial vehicle (1100, 1200), wherein the remote control information includes the target flight direction of the unmanned aerial vehicle (1100, 1200),
and wherein, when the operating mode information indicates the second operating mode,
the smart controller (910, 1001) is configured to generate remote control information, wherein the remote control information includes nose orientation of the remote controller, contained in attitude information of the remote controller, an operating angle of a rudder stick of the remote controller, and geographic position information of the remote controller;
the positioner (940) is configured to acquire the geographic position information of the remote controller;
the receiver (1003) is configured to receive geographic position information of the unmanned aerial vehicle (1100, 1200) sent by the unmanned aerial vehicle (1100, 1200);
the smart controller (910, 1001) is further configured to determine a relative position between the unmanned aerial vehicle (1100, 1200) and the remote controller (1300, 1400) in accordance with the geographic position information of the unmanned aerial vehicle, the geographic position information of the remote controller, and the nose orientation of the remote controller, contained in the attitude information of the remote controller;
the smart controller (910, 1001) is further configured to determine a target flight direction of the unmanned aerial vehicle (1100, 1200) in accordance with the relative position and the operating angle of the rudder stick of the remote controller (1300, 1400); and
the transmitter (930, 1004) is configured to send the remote control information to the unmanned aerial vehicle (1100, 1200), wherein the remote control information includes the target flight direction of the unmanned aerial vehicle (1100, 1200),
and wherein, when the operating mode information indicates the second operating mode:
the relative position refers to that the unmanned aerial vehicle (1100, 1200) is in front of the nose of the remote controller (1300, 1400) or in the back of the nose of the remote controller (1300, 1400),
the operating angle of the rudder stick of the remote controller (1300, 1400) is the direction of the nose orientation of the remote controller (1300, 1400) or the opposite direction of the nose orientation of the remote controller (1300, 1400), and
i) when the unmanned aerial vehicle (1100, 1200) is in front of the nose of the remote controller (1300, 1400) and the operating angle of the rudder stick is the direction of the nose orientation of the remote controller (1300, 1400), the smart controller is configured to determine the target flight direction of the unmanned aerial vehicle (1100, 1200) as away from the remote controller (1300, 1400);
ii) when the unmanned aerial vehicle (1100, 1200) is in front of the nose of the remote controller (1300, 1400) and the operating angle of the rudder stick is the opposite direction of the nose orientation of the remote controller (1300, 1400), the smart controller is configured to determine the target flight direction of the unmanned aerial vehicle (1100, 1200) as towards the remote controller (1300, 1400);
iii) when the unmanned aerial vehicle (1100, 1200) is in the back of the nose of the remote controller (1300, 1400) and the operating angle of the rudder stick is the direction of the nose orientation of the remote controller (1300, 1400), the smart controller is configured to determine the target flight direction of the unmanned aerial vehicle (1100, 1200) as towards the remote controller (1300, 1400); and
iv) when the unmanned aerial vehicle (1100, 1200) is in the back of the nose of the remote controller (1300, 1400) and the operating angle of the rudder stick is the opposite direction of the nose orientation of the remote controller (1300, 1400), the smart controller is configured to determine the target flight direction of the unmanned aerial vehicle (1100, 1200) as away from the remote controller (1300, 1400).

13. The remote controller (1300, 1400) of claim 12, wherein, when the operating mode information indicates the first operating mode, the smart controller (910, 1001) is further configured to:
monitor the user's operation on the rudder stick of the remote controller (1300, 1400) to acquire a channel value corresponding to the rudder stick of the remote controller; and
obtain the operating angle of the rudder stick of the remote controller (1300, 1400) in accordance with the channel value.

## Patentansprüche

1. Steuerverfahren eines kopflosen Modus für ein unbemanntes Luftfahrzeug (1100, 1200), wobei das Verfahren Folgendes umfasst:
Auswählen von einem von mindestens einem ersten Betriebsmodus und einem zweiten Betriebsmodus für das unbemannte Luftfahrzeug,
wobei das Steuerverfahren, wenn der erste Betriebsmodus ausgewählt wird, ferner Folgendes umfasst:
Empfangen von Fernsteuerinformationen, die von einer Fernsteuerung (1300, 1400) gesendet werden, wobei die Fernsteuerinformationen zum Anzeigen einer Betätigungsrichtung eines Steuerhebels der Fernsteuerung verwendet werden und eine Nasenausrichtung der Fernsteuerung, die in Lageinformationen der Fernsteuerung enthalten ist, und den Betätigungswinkel des Steuerhebels der Fernsteuerung beinhalten;
Erfassen von Lageinformationen des unbemannten Luftfahrzeugs (1100, 1200);
Bestimmen einer Sollflugrichtung des unbemannten Luftfahrzeugs (1100, 1200) gemäß den Fernsteuerinformationen und den Lageinformationen des unbemannten Luftfahrzeugs, wobei die Sollflugrichtung mit der Betätigungsrichtung des Steuerhebels der Fernsteuerung (1300, 1400) gleich ist; und Steuern des unbemannten Luftfahrzeugs (1100, 1200) derart, dass es in die Sollflugrichtung fliegt,
und wobei das Steuerverfahren, wenn der zweite Betriebsmodus ausgewählt wird, ferner Folgendes umfasst:
Empfangen von Fernsteuerinformationen, die von einer Fernsteuerung (1300, 1400) gesendet werden, wobei die Fernsteuerinformationen eine Nasenausrichtung der Fernsteuerung, die in Lageinformationen der Fernsteuerung enthalten ist, einen Betätigungswinkel des Steuerhebels der Fernsteuerung sowie geografische Positionsinformationen der Fernsteuerung beinhalten;
Erfassen von geografischen Positionsinformationen des unbemannten Luftfahrzeugs (1100, 1200);
Bestimmen einer relativen Position zwischen dem unbemannten Luftfahrzeug (1100, 1200) und der Fernsteuerung (1300, 1400) gemäß den geografischen Positionsinformationen des unbemannten Luftfahrzeugs, den geografischen Informationen der Fernsteuerung und der Nasenausrichtung der Fernsteuerung, die in den Lageinformationen der Fernsteuerung enthalten ist; Bestimmen einer Sollflugrichtung des unbemannten Luftfahrzeugs (1100, 1200) gemäß der relativen Position und dem Betätigungswinkel des Steuerhebels der Fernsteuerung (1300, 1400) und
Steuern des unbemannten Luftfahrzeugs (1100, 1200) derart, dass es in die Sollflugrichtung fliegt,
und wobei, wenn der zweite Betriebsmodus ausgewählt wird:
die relative Position sich darauf bezieht, dass sich das unbemannte Luftfahrzeug (1100, 1200) vor der Nase der Fernsteuerung (1300, 1400) oder hinter der Nase der Fernsteuerung (1300, 1400) befindet,
der Betätigungswinkel des Steuerhebels der Fernsteuerung (1300, 1400) die Richtung der Nasenausrichtung der Fernsteuerung (1300, 1400) oder die entgegengesetzte Richtung der Nasenausrichtung der Fernsteuerung (1300, 1400) ist und
i) wenn sich das unbemannte Luftfahrzeug (1100, 1200) vor der Nase der Fernsteuerung (1300, 1400) befindet und der Betätigungswinkel des Steuerhebels die Richtung der Nasenausrichtung der Fernsteuerung (1300, 1400) ist, bestimmt wird, dass die Sollflugrichtung des unbemannten Luftfahrzeugs (1100, 1200) von der Fernsteuerung (1300, 1400) weg ist;
ii) wenn sich das unbemannte Luftfahrzeug (1100, 1200) vor der Nase der Fernsteuerung (1300, 1400) befindet und der Betätigungswinkel des Steuerhebels die entgegengesetzte Richtung der Nasenausrichtung der Fernsteuerung (1300, 1400) ist, bestimmt wird, dass die Sollflugrichtung des unbemannten Luftfahrzeugs (1100, 1200) zur Fernsteuerung (1300, 1400) hin ist;
iii) wenn sich das unbemannte Luftfahrzeug (1100, 1200) hinter der Nase der Fernsteuerung (1300, 1400) befindet und der Betätigungswinkel des Steuerhebels die Richtung der Nasenausrichtung der Fernsteuerung (1300, 1400) ist, bestimmt wird, dass die Sollflugrichtung des unbemannten Luftfahrzeugs (1100, 1200) zur Fernsteuerung (1300, 1400) hin ist; und
iv) wenn sich das unbemannte Luftfahrzeug (1100, 1200) hinter der Nase der Fernsteuerung (1300, 1400) befindet und der Betätigungswinkel des Steuerhebels die entgegengesetzte Richtung der Nasenausrichtung der Fernsteuerung (1300, 1400) ist, bestimmt wird, dass die Sollflugrichtung des unbemannten Luftfahrzeugs (1100, 1200) von der Fernsteuerung (1300, 1400) weg ist.

2. Steuerverfahren nach Anspruch 1, wobei, wenn der erste Betriebsmodus ausgewählt wird,
das Bestimmen der Sollflugrichtung des unbemannten Luftfahrzeugs (1100, 1200) gemäß den Fernsteuerinformationen und den Lageinformationen des unbemannten Luftfahrzeugs Folgendes beinhaltet:
Einrichten eines ersten Koordinatensystems der Fernsteuerung (1300, 1400) gemäß der Nasenausrichtung der Fernsteuerung, die in den Lageinformationen der Fernsteuerung enthalten ist, wobei der Ursprung des ersten Koordinatensystems mit dem Ursprung des geografischen Koordinatensystems zusammenfällt; und
Identifizieren der Betätigungsrichtung des Steuerhebels der Fernsteuerung (1300, 1400) im ersten Koordinatensystem der Fernsteuerung gemäß dem Betätigungswinkel des Steuerhebels der Fernsteuerung, wobei die Betätigungsrichtung des Steuerhebels der Fernsteuerung die Sollflugrichtung des unbemannten Luftfahrzeugs (1100, 1200) ist.

3. Steuerverfahren nach Anspruch 2, wobei, wenn der erste Betriebsmodus ausgewählt wird,
das Steuern des unbemannten Luftfahrzeugs (1100, 1200) derart, dass es in die Sollflugrichtung fliegt, Folgendes beinhaltet:
Einrichten eines zweiten Koordinatensystems des unbemannten Luftfahrzeugs (1100, 1200) gemäß den Lageinformationen des unbemannten Luftfahrzeugs, wobei der Ursprung der zweiten Koordinatensysteme mit dem Ursprung des geografischen Koordinatensystems zusammenfällt; und
Erfassen eines Sollwinkels zwischen der horizontalen Achse des zweiten Koordinatensystems des unbemannten Luftfahrzeugs (1100, 1200) und der Sollflugrichtung;
Erfassen von einer oder mehreren Motorsteuerkomponenten von Rotoren des unbemannten Luftfahrzeugs (1100, 1200) gemäß dem Sollwinkel und
Steuern des Rotors bzw. der Rotoren des unbemannten Luftfahrzeugs (1100, 1200) derart, dass sie sich gemäß der einen oder den mehreren Motorsteuerkomponenten drehen, um das unbemannte Luftfahrzeug derart zu steuern, dass es in die Sollflugrichtung fliegt.

4. Steuerverfahren nach Anspruch 2 oder 3, wobei, wenn der erste Betriebsmodus ausgewählt wird,
die Lageinformationen der Fernsteuerung ferner einen Nickwinkel und einen Rollwinkel der Fernsteuerung beinhalten, und wobei das Einrichten des ersten Koordinatensystems der Fernsteuerung gemäß der Nasenausrichtung der Fernsteuerung, die in den Lageinformationen der Fernsteuerung enthalten ist, Folgendes beinhaltet:
Einrichten des ersten Koordinatensystems der Fernsteuerung (1300, 1400) gemäß dem Nickwinkel und dem Rollwinkel der Fernsteuerung, die in den Lageinformationen der Fernsteuerung enthalten sind.

5. Steuerverfahren nach Anspruch 1, das ferner Folgendes umfasst:
Empfangen von Rückkehranweisungsinformationen, die von der Fernsteuerung (1300, 1400) gesendet werden, wobei die Rückkehranweisungsinformationen geografische Positionsinformationen der Fernsteuerung beinhalten; und
Steuern des unbemannten Luftfahrzeugs (1100, 1200) derart, dass es zu einer geografischen Position fliegt, die von den geografischen Positionsinformationen der Fernsteuerung (1300, 1400) angezeigt wird.

6. Flugsteuerung (700, 800), die einen Empfänger (710, 820), einen Lagesensor (720, 840), einen Positionierer (740) und eine intelligente Steuerung (730, 830) umfasst,
wobei die Flugsteuerung dazu ausgelegt ist, Betriebsmodusinformationen zu empfangen, die einen von mindestens einem ersten Betriebsmodus und einem zweiten Betriebsmodus für ein unbemanntes Luftfahrzeug anzeigen, und wobei, wenn die Betriebsmodusinformationen den ersten Betriebsmodus anzeigen,
der Empfänger (710, 820) dazu ausgelegt ist, Fernsteuerinformationen, die von einer Fernsteuerung (1300, 1400) gesendet werden, zu empfangen, wobei die Fernsteuerinformationen zum Anzeigen einer Betätigungsrichtung eines Steuerhebels der Fernsteuerung verwendet werden und eine Nasenausrichtung der Fernsteuerung, die in Lageinformationen der Fernsteuerung enthalten ist, und einen Betätigungswinkel des Steuerhebels der Fernsteuerung beinhalten;
der Lagesensor (720, 840) dazu ausgelegt ist,
Lageinformationen des unbemannten Luftfahrzeugs (1100, 1200) zu erfassen; und
die intelligente Steuerung (730, 830) zu Folgendem ausgelegt ist:
Bestimmen einer Sollflugrichtung des unbemannten Luftfahrzeugs (1100, 1200) gemäß den Fernsteuerinformationen und den Lageinformationen des unbemannten Luftfahrzeugs, wobei die Sollflugrichtung mit der Betätigungsrichtung des Steuerhebels der Fernsteuerung (1300, 1400) gleich ist; und Steuern des unbemannten Luftfahrzeugs (1100, 1200) derart, dass es in die Sollflugrichtung fliegt,
und wobei, wenn die Betriebsmodusinformationen den zweiten Betriebsmodus anzeigen,
der Empfänger (710, 820) dazu ausgelegt ist, Fernsteuerinformationen, die von einer Fernsteuerung (1300, 1400) gesendet werden, zu empfangen, wobei die Fernsteuerinformationen eine Nasenausrichtung der Fernsteuerung, die in Lageinformationen der Fernsteuerung enthalten ist, einen Betätigungswinkel des Steuerhebels der Fernsteuerung sowie geografische Positionsinformationen der Fernsteuerung beinhalten;
der Positionierer (740) dazu ausgelegt ist, geografische Positionsinformationen des unbemannten Luftfahrzeugs (1100, 1200) zu erfassen; und
die intelligente Steuerung zu Folgendem ausgelegt ist:
Bestimmen einer relativen Position zwischen dem unbemannten Luftfahrzeug (1100, 1200) und der Fernsteuerung (1300, 1400) gemäß den geografischen Positionsinformationen des unbemannten Luftfahrzeugs, den geografischen Informationen der Fernsteuerung und der Nasenausrichtung der Fernsteuerung, die in den Lageinformationen der Fernsteuerung enthalten ist; Bestimmen einer Sollflugrichtung des unbemannten Luftfahrzeugs (1100, 1200) gemäß der relativen Position und dem Betätigungswinkel des Steuerhebels der Fernsteuerung (1300, 1400) und
Steuern des unbemannten Luftfahrzeugs (1100, 1200) derart, dass es in die Sollflugrichtung fliegt,
und wobei, wenn die Betriebsmodusinformationen den zweiten Betriebsmodus anzeigen:
die relative Position sich darauf bezieht, dass sich das unbemannte Luftfahrzeug (1100, 1200) vor der Nase der Fernsteuerung (1300, 1400) oder hinter der Nase der Fernsteuerung (1300, 1400) befindet,
der Betätigungswinkel des Steuerhebels der Fernsteuerung (1300, 1400) die Richtung der Nasenausrichtung der Fernsteuerung (1300, 1400) oder die entgegengesetzte Richtung der Nasenausrichtung der Fernsteuerung (1300, 1400) ist und
i) wenn sich das unbemannte Luftfahrzeug (1100, 1200) vor der Nase der Fernsteuerung (1300, 1400) befindet und der Betätigungswinkel des Steuerhebels die Richtung der Nasenausrichtung der Fernsteuerung (1300, 1400) ist, die intelligente Steuerung dazu ausgelegt ist zu bestimmen, dass die Sollflugrichtung des unbemannten Luftfahrzeugs (1100, 1200) von der Fernsteuerung (1300, 1400) weg ist;
ii) wenn sich das unbemannte Luftfahrzeug (1100, 1200) vor der Nase der Fernsteuerung (1300, 1400) befindet und der Betätigungswinkel des Steuerhebels die entgegengesetzte Richtung der Nasenausrichtung der Fernsteuerung (1300, 1400) ist, die intelligente Steuerung dazu ausgelegt ist zu bestimmen, dass die Sollflugrichtung des unbemannten Luftfahrzeugs (1100, 1200) zur Fernsteuerung (1300, 1400) hin ist;
iii) wenn sich das unbemannte Luftfahrzeug (1100, 1200) hinter der Nase der Fernsteuerung (1300, 1400) befindet und der Betätigungswinkel des Steuerhebels die Richtung der Nasenausrichtung der Fernsteuerung (1300, 1400) ist, die intelligente Steuerung dazu ausgelegt ist zu bestimmen, dass die Sollflugrichtung des unbemannten Luftfahrzeugs (1100, 1200) zur Fernsteuerung (1300, 1400) hin ist; und
iv) wenn sich das unbemannte Luftfahrzeug (1100, 1200) hinter der Nase der Fernsteuerung (1300, 1400) befindet und der Betätigungswinkel des Steuerhebels die entgegengesetzte Richtung der Nasenausrichtung der Fernsteuerung (1300, 1400) ist, die intelligente Steuerung dazu ausgelegt ist zu bestimmen, dass die Sollflugrichtung des unbemannten Luftfahrzeugs (1100, 1200) von der Fernsteuerung (1300, 1400) weg ist.

7. Flugsteuerung (700, 800) nach Anspruch 6, wobei, wenn die Betriebsmodusinformationen den ersten Betriebsmodus anzeigen, die intelligente Steuerung (730, 830) ferner zu Folgendem ausgelegt ist:
Einrichten eines ersten Koordinatensystems der Fernsteuerung (1300, 1400) gemäß der Nasenausrichtung der Fernsteuerung, die in den Lageinformationen der Fernsteuerung enthalten ist, wobei der Ursprung des ersten Koordinatensystems mit dem Ursprung des geografischen Koordinatensystems zusammenfällt; Identifizieren der Betätigungsrichtung des Steuerhebels der Fernsteuerung (1300, 1400) im ersten Koordinatensystem der Fernsteuerung gemäß dem Betätigungswinkel des Steuerhebels der Fernsteuerung;
Bestimmen der Betätigungsrichtung des Steuerhebels der Fernsteuerung (1300, 1400) als die Sollflugrichtung des unbemannten Luftfahrzeugs (1100, 1200).

8. Flugsteuerung (700, 800) nach Anspruch 7, wobei, wenn die Betriebsmodusinformationen den ersten Betriebsmodus anzeigen, die Lageinformationen der Fernsteuerung ferner einen Nickwinkel und einen Rollwinkel der Fernsteuerung beinhalten, und die intelligente Steuerung (730, 830) ferner zu Folgendem ausgelegt ist:
Einrichten des ersten Koordinatensystems der Fernsteuerung (1300, 1400) gemäß dem Nickwinkel und dem Rollwinkel der Fernsteuerung, die in den Lageinformationen der Fernsteuerung enthalten sind.

9. Flugsteuerung (700, 800) nach Anspruch 7 oder 8, wobei, wenn die Betriebsmodusinformationen den ersten Betriebsmodus anzeigen, die intelligente Steuerung (730, 830) ferner zu Folgendem ausgelegt ist:
Einrichten eines zweiten Koordinatensystems des unbemannten Luftfahrzeugs (1100, 1200) gemäß den Lageinformationen des unbemannten Luftfahrzeugs, wobei der Ursprung des zweiten Koordinatensystems mit dem Ursprung des geografischen Koordinatensystems zusammenfällt;
Erfassen eines Sollwinkels zwischen der horizontalen Achse des zweiten Koordinatensystems des unbemannten Luftfahrzeugs (1100, 1200) und der Sollflugrichtung;
Erfassen von einer oder mehreren Motorsteuerkomponenten von Rotoren des unbemannten Luftfahrzeugs (1100, 1200) gemäß dem Sollwinkel und
Steuern des Rotors bzw. der Rotoren des unbemannten Luftfahrzeugs (1100, 1200) derart, dass sie sich gemäß der einen oder den mehreren Motorsteuerkomponenten drehen, um das unbemannte Luftfahrzeug derart zu steuern, dass es in die Sollflugrichtung fliegt.

10. Flugsteuerung (700, 800) nach Anspruch 6, wobei:
der Empfänger (710, 820) ferner dazu ausgelegt ist, Rückkehranweisungsinformationen, die von der Fernsteuerung (1300, 1400) gesendet werden, zu empfangen, wobei die Rückkehranweisungsinformationen geografische Positionsinformationen der Fernsteuerung beinhalten; und
die intelligente Steuerung (730, 830) ferner dazu ausgelegt ist, das unbemannte Luftfahrzeug (1100, 1200) derart zu steuern, dass es zu einer geografischen Position fliegt, die von den geografischen Positionsinformationen der Fernsteuerung (1300, 1400) angezeigt wird.

11. Unbemanntes Luftfahrzeug (1100, 1200), das die Flugsteuerung (700, 800) in einem der Ansprüche 6-10 umfasst.

12. Fernsteuerung (1300, 1400), die einen Prozessor (900, 1000), eine intelligente Steuerung (910, 1001), einen Lagesensor (920, 1002), einen Positionierer (940), einen Empfänger (1003) und einen Sender (930, 1004) umfasst,
wobei der Prozessor (900, 1000) dazu ausgelegt ist, Betriebsmodusinformationen zu erhalten, die einen von mindestens einem ersten Betriebsmodus und einem zweiten Betriebsmodus für ein unbemanntes Luftfahrzeug (1100, 1200) anzeigen,
und wobei, wenn die Betriebsmodusinformationen den ersten Betriebsmodus anzeigen,
die intelligente Steuerung (910, 1001) zu Folgendem ausgelegt ist:
Überwachen der Betätigung eines Steuerhebels der Fernsteuerung (1300, 1400) durch einen Benutzer, um einen Betätigungswinkel des Steuerhebels zu erhalten, und
Erzeugen von Fernsteuerinformationen gemäß dem Betätigungswinkel des Steuerhebels und einer Nasenausrichtung der Fernsteuerung (1300, 1400), die in den Lageinformationen der Fernsteuerung enthalten ist, wobei die Fernsteuerinformationen zum Anzeigen einer Betätigungsrichtung des Steuerhebels der Fernsteuerung verwendet werden;
der Lagesensor (920, 1002) dazu ausgelegt ist, die Nasenausrichtung der Fernsteuerung (1300, 1400), die in den Lageinformationen der Fernsteuerung enthalten ist, zu erfassen;
der Empfänger (1003) dazu ausgelegt ist, Lageinformationen des unbemannten Luftfahrzeugs (1100, 1200), die vom unbemannten Luftfahrzeug (1100, 1200) gesendet werden, zu empfangen;
die intelligente Steuerung (910, 1001) ferner dazu ausgelegt ist, eine Sollflugrichtung des unbemannten Luftfahrzeugs (1100, 1200) gemäß den Fernsteuerinformationen und den Lageinformationen des unbemannten Luftfahrzeugs, zu bestimmen, wobei die Sollflugrichtung mit der Betätigungsrichtung des Steuerhebels der Fernsteuerung (1300, 1400) gleich ist; und
der Sender (930, 1004) dazu ausgelegt ist, die Fernsteuerinformationen an das unbemannte Luftfahrzeug (1100, 1200) zu senden, wobei die Fernsteuerinformationen die Sollflugrichtung des unbemannten Luftfahrzeugs (1100, 1200) beinhalten,
und wobei, wenn die Betriebsmodusinformationen den zweiten Betriebsmodus anzeigen,
die intelligente Steuerung (910, 1001) dazu ausgelegt ist, Fernsteuerinformationen zu erzeugen, wobei die Fernsteuerinformationen eine Nasenausrichtung der Fernsteuerung, die in Lageinformationen der Fernsteuerung enthalten ist, einen Betätigungswinkel des Steuerhebels der Fernsteuerung sowie geografische Positionsinformationen der Fernsteuerung beinhalten;
der Positionierer (940) dazu ausgelegt ist, die geografischen Positionsinformationen der Fernsteuerung zu erfassen;
der Empfänger (1003) dazu ausgelegt ist, geografische Positionsinformationen des unbemannten Luftfahrzeugs (1100, 1200), die vom unbemannten Luftfahrzeug (1100, 1200) gesendet werden, zu empfangen;
die intelligente Steuerung (910, 1001) ferner dazu ausgelegt ist, eine relative Position zwischen dem unbemannten Luftfahrzeug (1100, 1200) und der Fernsteuerung (1300, 1400) gemäß den geografischen Positionsinformationen des unbemannten Luftfahrzeugs, den geografischen Informationen der Fernsteuerung und der Nasenausrichtung der Fernsteuerung, die in den Lageinformationen der Fernsteuerung enthalten ist, zu bestimmen;
die intelligente Steuerung (910, 1001) ferner dazu ausgelegt ist, eine Sollflugrichtung des unbemannten Luftfahrzeugs (1100, 1200) gemäß der relativen Position und dem Betätigungswinkel des Steuerhebels der Fernsteuerung (1300, 1400) zu bestimmen; und
der Sender (930, 1004) dazu ausgelegt ist, die Fernsteuerinformationen an das unbemannte Luftfahrzeug (1100, 1200) zu senden, wobei die Fernsteuerinformationen die Sollflugrichtung des unbemannten Luftfahrzeugs (1100, 1200) beinhalten,
und wobei, wenn die Betriebsmodusinformationen den zweiten Betriebsmodus anzeigen:
die relative Position sich darauf bezieht, dass sich das unbemannte Luftfahrzeug (1100, 1200) vor der Nase der Fernsteuerung (1300, 1400) oder hinter der Nase der Fernsteuerung (1300, 1400) befindet,
der Betätigungswinkel des Steuerhebels der Fernsteuerung (1300, 1400) die Richtung der Nasenausrichtung der Fernsteuerung (1300, 1400) oder die entgegengesetzte Richtung der Nasenausrichtung der Fernsteuerung (1300, 1400) ist und
i) wenn sich das unbemannte Luftfahrzeug (1100, 1200) vor der Nase der Fernsteuerung (1300, 1400) befindet und der Betätigungswinkel des Steuerhebels die Richtung der Nasenausrichtung der Fernsteuerung (1300, 1400) ist, die intelligente Steuerung dazu ausgelegt ist zu bestimmen, dass die Sollflugrichtung des unbemannten Luftfahrzeugs (1100, 1200) von der Fernsteuerung (1300, 1400) weg ist;
ii) wenn sich das unbemannte Luftfahrzeug (1100, 1200) vor der Nase der Fernsteuerung (1300, 1400) befindet und der Betätigungswinkel des Steuerhebels die entgegengesetzte Richtung der Nasenausrichtung der Fernsteuerung (1300, 1400) ist, die intelligente Steuerung dazu ausgelegt ist zu bestimmen, dass die Sollflugrichtung des unbemannten Luftfahrzeugs (1100, 1200) zur Fernsteuerung (1300, 1400) hin ist;
iii) wenn sich das unbemannte Luftfahrzeug (1100, 1200) hinter der Nase der Fernsteuerung (1300, 1400) befindet und der Betätigungswinkel des Steuerhebels die Richtung der Nasenausrichtung der Fernsteuerung (1300, 1400) ist, die intelligente Steuerung dazu ausgelegt ist zu bestimmen, dass die Sollflugrichtung des unbemannten Luftfahrzeugs (1100, 1200) zur Fernsteuerung (1300, 1400) hin ist; und
iv) wenn sich das unbemannte Luftfahrzeug (1100, 1200) hinter der Nase der Fernsteuerung (1300, 1400) befindet und der Betätigungswinkel des Steuerhebels die entgegengesetzte Richtung der Nasenausrichtung der Fernsteuerung (1300, 1400) ist, die intelligente Steuerung dazu ausgelegt ist zu bestimmen, dass die Sollflugrichtung des unbemannten Luftfahrzeugs (1100, 1200) von der Fernsteuerung (1300, 1400) weg ist.

13. Fernsteuerung (1300, 1400) nach Anspruch 12, wobei, wenn die Betriebsmodusinformationen den ersten Betriebsmodus anzeigen, die intelligente Steuerung (910, 1001) ferner zu Folgendem ausgelegt ist:
Überwachen der Betätigung des Steuerhebels der Fernsteuerung (1300, 1400) durch den Benutzer, um einen Kanalwert zu erfassen, der dem Steuerhebel der Fernsteuerung entspricht; und
Erhalten des Betätigungswinkels des Steuerhebels der Fernsteuerung (1300, 1400) gemäß dem Kanalwert.

## Revendications

1. Procédé de commande d'un mode sans tête pour un véhicule aérien sans pilote (1100, 1200), le procédé de commande comprenant l'étape ci-dessous consistant à :
sélectionner un mode parmi au moins un premier mode de fonctionnement et un second mode de fonctionnement pour le véhicule aérien sans pilote ;
dans lequel, lorsque le premier mode de fonctionnement est sélectionné, le procédé de commande comprend en outre les étapes ci-dessous consistant à :
recevoir des informations de commande distante envoyées par un contrôleur distant (1300, 1400), dans lequel les informations de commande distante sont utilisées pour indiquer une direction de fonctionnement d'un manche à balai du contrôleur distant, et incluent une orientation du nez du contrôleur distant, contenue dans des informations d'attitude du contrôleur distant, et l'angle de fonctionnement du manche à balai du contrôleur distant ;
acquérir des informations d'attitude du véhicule aérien sans pilote (1100, 1200) ;
déterminer une direction de vol cible du véhicule aérien sans pilote (1100, 1200) conformément aux informations de commande distante et aux informations d'attitude du véhicule aérien sans pilote, dans lequel la direction de vol cible est égale à la direction de fonctionnement du manche à balai du contrôleur distant (1300, 1400) ; et
commander au véhicule aérien sans pilote (1100, 1200) de voler vers la direction de vol cible ; et
dans lequel, lorsque le second mode de fonctionnement est sélectionné, le procédé de commande comprend en outre les étapes ci-dessous consistant à :
recevoir des informations de commande distante envoyées par un contrôleur distant (1300, 1400), dans lequel les informations de commande distante incluent une orientation du nez du contrôleur distant, contenue dans des informations d'attitude du contrôleur distant, un angle de fonctionnement d'un manche à balai du contrôleur distant, et des informations de position géographique du contrôleur distant ;
acquérir des informations de position géographique du véhicule aérien sans pilote (1100, 1200) ;
déterminer une position relative entre le véhicule aérien sans pilote (1100, 1200) et le contrôleur distant (1300, 1400) conformément aux informations de position géographique du véhicule aérien sans pilote, aux informations de position géographique du contrôleur distant, et à l'orientation du nez du contrôleur distant, contenue dans des informations d'attitude du contrôleur distant ;
déterminer une direction de vol cible du véhicule aérien sans pilote (1100, 1200) conformément à la position relative et à l'angle de fonctionnement du manche à balai du contrôleur distant (1300, 1400) ; et
commander au véhicule aérien sans pilote (1100, 1200) de voler vers la direction de vol cible ; et
dans lequel, lorsque le second mode de fonctionnement est sélectionné :
la position relative fait référence au fait que le véhicule aérien sans pilote (1100, 1200) est à l'avant du nez du contrôleur distant (1300, 1400) ou à l'arrière du nez du contrôleur distant (1300, 1400) ;
l'angle de fonctionnement du manche à balai du contrôleur distant (1300, 1400) correspond à la direction de l'orientation du nez du contrôleur distant (1300, 1400) ou à la direction opposée de l'orientation du nez du contrôleur distant (1300, 1400) ; et
i) lorsque le véhicule aérien sans pilote (1100, 1200) est à l'avant du nez du contrôleur distant (1300, 1400) et lorsque l'angle de fonctionnement du manche à balai correspond à la direction de l'orientation du nez du contrôleur distant (1300, 1400), la direction de vol cible du véhicule aérien sans pilote (1100, 1200) est déterminée comme s'éloignant du contrôleur distant (1300, 1400) ;
ii) lorsque le véhicule aérien sans pilote (1100, 1200) est à l'avant du nez du contrôleur distant (1300, 1400) et lorsque l'angle de fonctionnement du manche à balai correspond à la direction opposée de l'orientation du nez du contrôleur distant (1300, 1400), la direction de vol cible du véhicule aérien sans pilote (1100, 1200) est déterminée comme étant vers le contrôleur distant (1300, 1400) ;
iii) lorsque le véhicule aérien sans pilote (1100, 1200) est à l'arrière du nez du contrôleur distant (1300, 1400) et lorsque l'angle de fonctionnement du manche à balai correspond à la direction de l'orientation du nez du contrôleur distant (1300, 1400), la direction de vol cible du véhicule aérien sans pilote (1100, 1200) est déterminée comme étant vers le contrôleur distant (1300, 1400) ; et
iv) lorsque le véhicule aérien sans pilote (1100, 1200) est à l'arrière du nez du contrôleur distant (1300, 1400) et lorsque l'angle de fonctionnement du manche à balai correspond à la direction opposée de l'orientation du nez du contrôleur distant (1300, 1400), la direction de vol cible du véhicule aérien sans pilote (1100, 1200) est déterminée comme s'éloignant du contrôleur distant (1300, 1400).

2. Procédé de commande selon la revendication 1, dans lequel, lorsque le premier mode de fonctionnement est sélectionné,
l'étape de détermination de la direction de vol cible du véhicule aérien sans pilote (1100, 1200) conformément aux informations de commande distante et aux informations d'attitude du véhicule aérien sans pilote inclut les étapes ci-dessous consistant à :
établir un premier système de coordonnées du contrôleur distant (1300, 1400) conformément à l'orientation du nez du contrôleur distant, contenue dans les informations d'attitude du contrôleur distant, dans lequel l'origine du premier système de coordonnées coïncide avec l'origine d'un système de coordonnées géographiques ; et
identifier la direction de fonctionnement du manche à balai du contrôleur distant (1300, 1400) dans le premier système de coordonnées du contrôleur distant conformément à l'angle de fonctionnement du manche à balai du contrôleur distant, dans lequel la direction de fonctionnement du manche à balai du contrôleur distant correspond à la direction de vol cible du véhicule aérien sans pilote (1100, 1200).

3. Procédé de commande selon la revendication 2, dans lequel, lorsque le premier mode de fonctionnement est sélectionné,
l'étape consistant à commander au véhicule aérien sans pilote (1100, 1200) de voler vers la direction de vol cible inclut les étapes ci-dessous consistant à :
établir un second système de coordonnées du véhicule aérien sans pilote (1100, 1200) conformément aux informations d'attitude du véhicule aérien sans pilote, dans lequel l'origine du second système de coordonnées coïncide avec l'origine du système de coordonnées géographiques ; et
acquérir un angle cible entre l'axe horizontal du second système de coordonnées du véhicule aérien sans pilote (1100, 1200) et la direction de vol cible ;
acquérir un ou plusieurs composants de commande de moteur de rotors du véhicule aérien sans pilote (1100, 1200) conformément à l'angle cible ; et
commander au(x) rotor(s) du véhicule aérien sans pilote (1100, 1200) de tourner conformément audit un ou auxdits plusieurs composants de commande de moteur, de manière à commander au véhicule aérien sans pilote de voler vers la direction de vol cible.

4. Procédé de commande selon la revendication 2 ou 3, dans lequel, lorsque le premier mode de fonctionnement est sélectionné,
les informations d'attitude du contrôleur distant incluent en outre un angle de tangage et un angle de roulis du contrôleur distant ; et
dans lequel l'étape d'établissement du premier système de coordonnées du contrôleur distant conformément à l'orientation du nez du contrôleur distant, contenue dans les informations d'attitude du contrôleur distant, inclut l'étape ci-dessous consistant à :
établir le premier système de coordonnées du contrôleur distant (1300, 1400) conformément à l'angle de tangage et à l'angle de roulis du contrôleur distant, contenus dans les informations d'attitude du contrôleur distant.

5. Procédé de commande selon la revendication 1, comprenant en outre les étapes ci-dessous consistant à :
recevoir des informations d'instruction de retour envoyées par le contrôleur distant (1300, 1400), dans lequel les informations d'instruction de retour incluent des informations de position géographique du contrôleur distant ; et
commander au véhicule aérien sans pilote (1100, 1200) de voler vers une position géographique indiquée par les informations de position géographique du contrôleur distant (1300, 1400).

6. Contrôleur de vol (700, 800) comprenant un récepteur (710, 820), un capteur d'attitude (720, 840), un positionneur (740) et un contrôleur intelligent (730, 830),
dans lequel le contrôleur de vol est configuré de manière à recevoir des informations de mode de fonctionnement indiquant un mode parmi au moins un premier mode de fonctionnement et un second mode de fonctionnement pour un véhicule aérien sans pilote ; et
dans lequel, lorsque les informations de mode de fonctionnement indiquent le premier mode de fonctionnement,
le récepteur (710, 820) est configuré de manière à recevoir des informations de commande distante envoyées par un contrôleur distant (1300, 1400), dans lequel les informations de commande distante sont utilisées pour indiquer une direction de fonctionnement d'un manche à balai du contrôleur distant, et incluent une orientation du nez du contrôleur distant, contenue dans des informations d'attitude du contrôleur distant, et un angle de fonctionnement du manche à balai du contrôleur distant ;
le capteur d'attitude (720, 840) est configuré de manière à acquérir des informations d'attitude du véhicule aérien sans pilote (1100, 1200) ; et
le contrôleur intelligent (730, 830) est configuré de manière à :
déterminer une direction de vol cible du véhicule aérien sans pilote (1100, 1200) conformément aux informations de commande distante et aux informations d'attitude du véhicule aérien sans pilote, dans lequel la direction de vol cible est égale à la direction de fonctionnement du manche à balai du contrôleur distant (1300, 1400) ; et
commander au véhicule aérien sans pilote (1100, 1200) de voler vers
la direction de vol cible ; et
dans lequel, lorsque les informations de mode de fonctionnement indiquent le second mode de fonctionnement,
le récepteur (710, 820) est configuré de manière à recevoir des informations de commande distante envoyées par un contrôleur distant (1300, 1400), dans lequel les informations de commande distante incluent une orientation du nez du contrôleur distant, contenue dans des informations d'attitude du contrôleur distant, un angle de fonctionnement d'un manche à balai du contrôleur distant, et des informations de position géographique du contrôleur distant ;
le positionneur (740) est configuré de manière à acquérir des informations de position géographique du véhicule aérien sans pilote (1100, 1200) ; et
le contrôleur intelligent est configuré de manière à :
déterminer une position relative entre le véhicule aérien sans pilote (1100, 1200) et le contrôleur distant (1300, 1400) conformément aux informations de position géographique du véhicule aérien sans pilote, aux informations de position géographique du contrôleur distant et à l'orientation du nez du contrôleur distant, contenue dans des informations d'attitude du contrôleur distant ;
déterminer une direction de vol cible du véhicule aérien sans pilote (1100, 1200) conformément à la position relative et à l'angle de fonctionnement du manche à balai du contrôleur distant (1300, 1400) ; et
commander au véhicule aérien sans pilote (1100, 1200) de voler vers
la direction de vol cible ; et
dans lequel, lorsque les informations de mode de fonctionnement indiquent le second mode de fonctionnement :
la position relative fait référence au fait que le véhicule aérien sans pilote (1100, 1200) est à l'avant du nez du contrôleur distant (1300, 1400) ou à l'arrière du nez du contrôleur distant (1300, 1400) ;
l'angle de fonctionnement du manche à balai du contrôleur distant (1300, 1400) correspond à la direction de l'orientation du nez du contrôleur distant (1300, 1400) ou à la direction opposée de l'orientation du nez du contrôleur distant (1300, 1400) ; et
i) lorsque le véhicule aérien sans pilote (1100, 1200) est à l'avant du nez du contrôleur distant (1300, 1400) et lorsque l'angle de fonctionnement du manche à balai correspond à la direction de l'orientation du nez du contrôleur distant (1300, 1400), le contrôleur intelligent est configuré de manière à déterminer la direction de vol cible du véhicule aérien sans pilote (1100, 1200) comme s'éloignant du contrôleur distant (1300, 1400) ;
ii) lorsque le véhicule aérien sans pilote (1100, 1200) est à l'avant du nez du contrôleur distant (1300, 1400) et lorsque l'angle de fonctionnement du manche à balai correspond à la direction opposée de l'orientation du nez du contrôleur distant (1300, 1400), le contrôleur intelligent est configuré de manière à déterminer la direction de vol cible du véhicule aérien sans pilote (1100, 1200) comme étant vers le contrôleur distant (1300, 1400) ;
iii) lorsque le véhicule aérien sans pilote (1100, 1200) est à l'arrière du nez du contrôleur distant (1300, 1400) et lorsque l'angle de fonctionnement du manche à balai correspond à la direction de l'orientation du nez du contrôleur distant (1300, 1400), le contrôleur intelligent est configuré de manière à déterminer la direction de vol cible du véhicule aérien sans pilote (1100, 1200) comme étant vers le contrôleur distant (1300, 1400) ; et
iv) lorsque le véhicule aérien sans pilote (1100, 1200) est à l'arrière du nez du contrôleur distant (1300, 1400) et lorsque l'angle de fonctionnement du manche à balai correspond à la direction opposée de l'orientation du nez du contrôleur distant (1300, 1400), le contrôleur intelligent est configuré de manière à déterminer la direction de vol cible du véhicule aérien sans pilote (1100, 1200) comme s'éloignant du contrôleur distant (1300, 1400).

7. Contrôleur de vol (700, 800) selon la revendication 6, dans lequel, lorsque les informations de mode de fonctionnement indiquent le premier mode de fonctionnement, le contrôleur intelligent (730, 830) est en outre configuré de manière à :
établir un premier système de coordonnées du contrôleur distant (1300, 1400) conformément à l'orientation du nez du contrôleur distant, contenue dans les informations d'attitude du contrôleur distant, dans lequel l'origine du premier système de coordonnées coïncide avec l'origine d'un système de coordonnées géographiques ;
identifier la direction de fonctionnement du manche à balai du contrôleur distant (1300, 1400) dans le premier système de coordonnées du contrôleur distant conformément à l'angle de fonctionnement du manche à balai du contrôleur distant ;
déterminer la direction de fonctionnement du manche à balai du contrôleur distant (1300, 1400) comme étant la direction de vol cible du véhicule aérien sans pilote (1100, 1200).

8. Contrôleur de vol (700, 800) selon la revendication 7, dans lequel, lorsque les informations de mode de fonctionnement indiquent le premier mode de fonctionnement,
les informations d'attitude du contrôleur distant incluent en outre un angle de tangage et un angle de roulis du contrôleur distant ; et
le contrôleur intelligent (730, 830) est en outre configuré de manière à :
configurer le premier système de coordonnées du contrôleur distant (1300, 1400) conformément à l'angle de tangage et à l'angle de roulis du contrôleur distant, contenus dans les informations d'attitude du contrôleur distant.

9. Contrôleur de vol (700, 800) selon la revendication 7 ou 8, dans lequel, lorsque les informations de mode de fonctionnement indiquent le premier mode de fonctionnement, le contrôleur intelligent (730, 830) est en outre configuré de manière à :
établir un second système de coordonnées du véhicule aérien sans pilote (1100, 1200) conformément aux informations d'attitude du véhicule aérien sans pilote, dans lequel l'origine du second système de coordonnées coïncide avec l'origine du système de coordonnées géographiques ;
acquérir un angle cible entre l'axe horizontal du second système de coordonnées du véhicule aérien sans pilote (1100, 1200) et la direction de vol cible ;
acquérir un ou plusieurs composants de commande de moteur de rotors du véhicule aérien sans pilote (1100, 1200) conformément à l'angle cible ; et
commander au(x) rotor(s) du véhicule aérien sans pilote (1100, 1200) de tourner conformément audit un ou auxdits plusieurs composants de commande de moteur, de manière à commander au véhicule aérien sans pilote de voler vers la direction de vol cible.

10. Contrôleur de vol (700, 800) selon la revendication 6, dans lequel :
le récepteur (710, 820) est en outre configuré de manière à recevoir des informations d'instruction de retour envoyées par le contrôleur distant (1300, 1400), dans lequel les informations d'instruction de retour incluent des informations de position géographique du contrôleur distant ; et
le contrôleur intelligent (730, 830) est en outre configuré de manière à commander au véhicule aérien sans pilote (1100, 1200) de voler vers une position géographique indiquée par les informations de position géographique du contrôleur distant (1300, 1400).

11. Véhicule aérien sans pilote (1100, 1200), comprenant le contrôleur de vol (700, 800) selon l'une quelconque des revendications 6 à 10.

12. Contrôleur distant (1300, 1400) comprenant un processeur (900, 1000), un contrôleur intelligent (910, 1001), un capteur d'attitude (920, 1002), un positionneur (940), un récepteur (1003) et un émetteur (930, 1004),
dans lequel le processeur (900, 1000) est configuré de manière à obtenir des informations de mode de fonctionnement indiquant un mode parmi au moins un premier mode de fonctionnement et un second mode de fonctionnement pour un véhicule aérien sans pilote (1100, 1200) ; et
dans lequel, lorsque les informations de mode de fonctionnement indiquent le premier mode de fonctionnement,
le contrôleur intelligent (910, 1001) est configuré de manière à :
surveiller une opération d'un utilisateur sur un manche à balai du contrôleur distant (1300, 1400) pour obtenir un angle de fonctionnement du manche à balai ; et
générer des informations de commande distante conformément à l'angle de fonctionnement du manche à balai, et à l'orientation du nez du contrôleur distant (1300, 1400), contenue dans des informations d'attitude du contrôleur distant, dans lequel les informations de commande distante sont utilisées pour indiquer une direction de fonctionnement du manche à balai du contrôleur distant ;
le capteur d'attitude (920, 1002) est configuré de manière à acquérir l'orientation du nez du contrôleur distant (1300, 1400), contenue dans les informations d'attitude du contrôleur distant ;
le récepteur (1003) est configuré de manière à recevoir des informations d'attitude du véhicule aérien sans pilote (1100, 1200) envoyées par le véhicule aérien sans pilote (1100, 1200) ;
le contrôleur intelligent (910, 1001) est en outre configuré de manière à déterminer une direction de vol cible du véhicule aérien sans pilote (1100, 1200) conformément aux informations de commande distante et aux informations d'attitude du véhicule aérien sans pilote, dans lequel la direction de vol cible est égale à la direction de fonctionnement du manche à balai du contrôleur distant (1300, 1400) ; et
l'émetteur (930, 1004) est configuré de manière à envoyer les informations de commande distante au véhicule aérien sans pilote (1100, 1200), dans lequel les informations de commande distante incluent la direction de vol cible du véhicule aérien sans pilote (1100, 1200) ; et
dans lequel, lorsque les informations de mode de fonctionnement indiquent le second mode de fonctionnement,
le contrôleur intelligent (910, 1001) est configuré de manière à générer des informations de commande distante, dans lequel les informations de commande distante incluent une orientation du nez du contrôleur distant, contenue dans des informations d'attitude du contrôleur distant, un angle de fonctionnement d'un manche à balai du contrôleur distant, et des informations de position géographique du contrôleur distant ;
le positionneur (940) est configuré de manière à acquérir les informations de position géographique du contrôleur distant ;
le récepteur (1003) est configuré de manière à recevoir des informations de position géographique du véhicule aérien sans pilote (1100, 1200) envoyées par le véhicule aérien sans pilote (1100, 1200) ;
le contrôleur intelligent (910, 1001) est en outre configuré de manière à déterminer une position relative entre le véhicule aérien sans pilote (1100, 1200) et le contrôleur distant (1300, 1400) conformément aux informations de position géographique du véhicule aérien sans pilote, aux informations de position géographique du contrôleur distant, et à l'orientation du nez du contrôleur distant, contenue dans des informations d'attitude du contrôleur distant ;
le contrôleur intelligent (910, 1001) est en outre configuré de manière à déterminer une direction de vol cible du véhicule aérien sans pilote (1100, 1200) conformément à la position relative et à l'angle de fonctionnement du manche à balai du contrôleur distant (1300, 1400) ; et
l'émetteur (930, 1004) est configuré de manière à envoyer les informations de commande distante au véhicule aérien sans pilote (1100, 1200), dans lequel les informations de commande distante incluent la direction de vol cible du véhicule aérien sans pilote (1100, 1200) ; et
dans lequel, lorsque les informations de mode de fonctionnement indiquent le second mode de fonctionnement :
la position relative fait référence au fait que le véhicule aérien sans pilote (1100, 1200) est à l'avant du nez du contrôleur distant (1300, 1400) ou à l'arrière du nez du contrôleur distant (1300, 1400) ;
l'angle de fonctionnement du manche à balai du contrôleur distant (1300, 1400) correspond à la direction de l'orientation du nez du contrôleur distant (1300, 1400) ou à la direction opposée de l'orientation du nez du contrôleur distant (1300, 1400) ; et
i) lorsque le véhicule aérien sans pilote (1100, 1200) est à l'avant du nez du contrôleur distant (1300, 1400) et lorsque l'angle de fonctionnement du manche à balai correspond à la direction de l'orientation du nez du contrôleur distant (1300, 1400), le contrôleur intelligent est configuré de manière à déterminer la direction de vol cible du véhicule aérien sans pilote (1100, 1200) comme s'éloignant du contrôleur distant (1300, 1400) ;
ii) lorsque le véhicule aérien sans pilote (1100, 1200) est à l'avant du nez du contrôleur distant (1300, 1400) et lorsque l'angle de fonctionnement du manche à balai correspond à la direction opposée de l'orientation du nez du contrôleur distant (1300, 1400), le contrôleur intelligent est configuré de manière à déterminer la direction de vol cible du véhicule aérien sans pilote (1100, 1200) comme étant vers le contrôleur distant (1300, 1400) ;
iii) lorsque le véhicule aérien sans pilote (1100, 1200) est à l'arrière du nez du contrôleur distant (1300, 1400) et lorsque l'angle de fonctionnement du manche à balai correspond à la direction de l'orientation du nez du contrôleur distant (1300, 1400), le contrôleur intelligent est configuré de manière à déterminer la direction de vol cible du véhicule aérien sans pilote (1100, 1200) comme étant vers le contrôleur distant (1300, 1400) ; et
iv) lorsque le véhicule aérien sans pilote (1100, 1200) est à l'arrière du nez du contrôleur distant (1300, 1400) et lorsque l'angle de fonctionnement du manche à balai correspond à la direction opposée de l'orientation du nez du contrôleur distant (1300, 1400), le contrôleur intelligent est configuré de manière à déterminer la direction de vol cible du véhicule aérien sans pilote (1100, 1200) comme s'éloignant du contrôleur distant (1300, 1400).

13. Contrôleur distant (1300, 1400) selon la revendication 12, dans lequel, lorsque les informations de mode de fonctionnement indiquent le premier mode de fonctionnement, le contrôleur intelligent (910, 1001) est en outre configuré de manière à :
surveiller une opération de l'utilisateur sur le manche à balai du contrôleur distant (1300, 1400) pour acquérir une valeur de canal correspondant au manche à balai du contrôleur distant ; et
obtenir l'angle de fonctionnement du manche à balai du contrôleur distant (1300, 1400) conformément à la valeur de canal.
